# EUROPEAN PATENT APPLICATION

(11) **EP 4 380 226 A1**
(43) Date of publication of application: **05.06.2024**
(21) Application number: 22851933.6
(22) Date of filing: 22.07.2022
(51) Int. Cl.: H04W 28/02

(54) **COMMUNICATION METHOD AND APPARATUS**

(30) Priority: 03.08.2021 CN 202110884514
(71) Applicant: Huawei Technologies Co., Ltd., Shenzhen, Guangdong 518129 (CN)
(72) Inventor: WANG, Jun, Shenzhen, Guangdong 518129 (CN); LYU, Yongxia, Shenzhen, Guangdong 518129 (CN); WANG, Ting, Shenzhen, Guangdong 518129 (CN); ZHANG, Liqing, Shenzhen, Guangdong 518129 (CN); MA, Jianglei, Shenzhen, Guangdong 518129 (CN)
(74) Representative: Körber, Martin Hans
(86) International application number: PCT/CN2022/107481
(87) International publication number: WO 2023/011219

(57) **Abstract**

Embodiments of this application provide a communication method and an apparatus. A first communication device obtains configuration information of a radio bearer. The configuration information indicates that a transmission mode of an RLC entity corresponding to the radio bearer is a transparent mode. The first communication device sets, to the transparent mode based on the configuration information, the transmission mode of the RLC entity corresponding to the radio bearer. The transmission mode of the RLC entity corresponding to the radio bearer is set to the transparent mode, so that header overheads of an RLC PDU corresponding to the radio bearer can be effectively reduced, air interface overheads can be reduced, and requirements of a URLLC service for low latency and high reliability can be better met.

## Description

### CROSS-REFERENCE TO RELATED APPLICATIONS

This application claims priority to Chinese Patent Application No. 202110884514.8, filed with the China National Intellectual Property Administration on August 3, 2021 and entitled "COMMUNICATION METHOD AND APPARATUS", which is incorporated herein by reference in its entirety.

### TECHNICAL FIELD

Embodiments of this application relate to the wireless communication field, and in particular, to a communication method and an apparatus.

### BACKGROUND

Ultra-reliable low-latency communication (ultra-reliable low-latency communication, URLLC) is one of important application scenarios of a 5th generation mobile communication technology (5th generation mobile network, 5G). URLLC features low latency and high reliability. Therefore, it is widely applied in fields such as autonomous driving, industrial manufacturing, internet of vehicles, and a smart grid.

According to a new radio (New radio, NR) protocol, there is a specific protocol layer structure between devices that communicate with each other. For example, a data packet from a transmit end application (application, APP) layer needs to be processed by a plurality of protocol layers such as a service data adaptation protocol (service data adaptation protocol, SDAP) layer, a packet data convergence protocol (Packet Data Convergence Protocol, PDCP) layer, a radio link control (Radio link control, RLC) layer, a media access control (medium access control, MAC) layer, and a physical layer (physical layer, PHY). Processing at each layer is complex, which not only causes long processing latency, but also increases extra header overheads, in other words, air interface overheads are increased, and therefore, it is difficult to meet requirements of the URLLC for low latency and high reliability.

Therefore, how to reduce the air interface overheads and the processing latency to meet the requirements of the URLLC for low latency and high reliability is a technical problem that needs to be urgently resolved.

### SUMMARY

Embodiments of this application provide a communication method and an apparatus, to reduce air interface overheads and processing latency, and meet requirements of URLLC for low latency and high reliability.

According to a first aspect, a communication method is provided. For example, the method is performed by an RLC entity of a first communication device. The first communication device is, for example, a base station or a terminal. This is not limited in this application. The method includes the following steps. The RLC entity of the first communication device obtains an RLC SDU from an upper-layer entity. The RLC entity of the first communication device generates an RLC PDU based on the RLC SDU. The RLC PDU includes a header and data. The data is a first segment in data of the RLC SDU, and the header includes a sequence number and a first index. The sequence number identifies the RLC SDU, and the first index identifies a number of the first segment in segments of the RLC SDU. Different segments in the RLC SDU correspond to different indexes respectively. The RLC entity of the first communication device sends the RLC PDU.

Correspondingly, according to a second aspect, a communication method is provided. For example, the method is performed by an RLC entity of a second communication device. The second communication device can communicate with a first communication device. The second communication device is, for example, a base station or a terminal. This is not limited in this application. The method includes the following steps. The RLC entity of the second communication device receives an RLC PDU. The RLC PDU includes a header and data. The data is a first segment of an RLC SDU, and the header includes a sequence number and a first index. The sequence number identifies the RLC SDU, and the first index identifies a number of the first segment in segments of the RLC SDU. Different segments in the RLC SDU correspond to different indexes respectively. The RLC entity of the second communication device determines, based on the sequence number and the first index, that the data of the RLC PDU is the first segment in the segments of the RLC SDU.

In the foregoing solution, an index indicates a specific segment in the RLC SDU that data in each RLC PDU is. This can reduce header overheads of the RLC PDU and ensure data transmission reliability, to reduce air interface overheads.

In a possible design, a value of the first index does not exceed a threshold. In other words, overheads corresponding to the first index do not exceed preset bits. For example, if a value range of the first index is 0 to 15, a corresponding binary is represented as "1111", and the overheads of the first index are at most 4 bits.

In this way, it can be ensured that the overheads of the first index are within a preset bit range, to reduce the air interface overheads.

According to a third aspect, a communication method is provided. For example, the method is performed by an RLC entity of a first communication device. The first communication device is, for example, a base station or a terminal. This is not limited in this application. The method includes the following steps. The RLC entity of the first communication device obtains an RLC SDU from an upper-layer entity. The RLC entity of the first communication device determines, based on configuration information, that the RLC SDU is not segmented, where the configuration information indicates that the RLC SDU is not segmented. The RLC entity of the first communication device generates an RLC PDU based on the RLC SDU. Data of the RLC PDU is a complete RLC SDU. The RLC entity of the first communication device sends the RLC SDU.

Correspondingly, according to a fourth aspect, a communication method is provided. For example, the method is performed by an RLC entity of a second communication device. The second communication device can communicate with a first communication device. The second communication device is, for example, a base station or a terminal. This is not limited in this application. The method includes the following steps. The RLC entity of the second communication device receives an RLC PDU. The RLC entity of the second communication device determines, based on configuration information, that data of the RLC PDU is a complete RLC SDU.

In the foregoing solution, it can be implemented that a SO field is not carried in the RLC PDU, to reduce header overheads of the RLC PDU and reduce air interface overheads.

In a possible design, a network device (for example, the first communication device, the second communication device, or another device) further generates and sends the configuration information. The configuration information indicates that the RLC SDU of the first communication device is not segmented.

In a possible design, a configuration granularity of the configuration information may be determined by one or more of the following: a data radio bearer, a quality of service flow, a PDU session, a network slice, a logical channel identifier, a terminal, a PDCP entity, or an RLC entity.

In this way, a plurality of configuration granularities of the configuration information is provided, so that flexibility of the solution is improved.

In a possible design, specific content of the configuration information may include: first indication information, indicating that a service type is an ultra-reliable low-latency communication service; and/or second indication information, indicating that an allowed maximum quantity of segments of the RLC SDU is 0 or that the RLC SDU is not segmented. For example, the configuration granularity is determined by the data radio bearer. In this case, the configuration information may include: the first indication information, indicating that a service type corresponding to a first data radio bearer is an ultra-reliable low-latency communication service, and/or the second indication information, indicating that an allowed maximum quantity of segments of an RLC SDU corresponding to the first data radio bearer is 0 or that the RLC SDU corresponding to the first data radio bearer is not segmented.

In this way, the content of the configuration information can be implemented in a plurality of manners, so that the flexibility of the solution is improved.

According to a fifth aspect, a communication method is provided. The method may be performed by a first communication device. The first communication device is, for example, a base station or a terminal. This is not limited in this application. The method includes the following steps. The first communication device obtains configuration information of a radio bearer. The configuration information indicates that a transmission mode of an RLC entity corresponding to the radio bearer is a transparent mode. The first communication device sets, to the transparent mode based on the configuration information, the transmission mode of the RLC entity corresponding to the radio bearer.

Correspondingly, according to a sixth aspect, a communication method is provided. The method may be performed by a second communication device. The second communication device can communicate with a first communication device. The second communication device is, for example, a base station. This is not limited in this application. The method includes the following steps. The second communication device generates configuration information of a radio bearer. The configuration information indicates that a transmission mode of an RLC entity corresponding to the radio bearer is a transparent mode. The second communication device sends the configuration information.

Based on the foregoing solution, it can be implemented that a specific radio bearer is separately configured to support an RLC TM mode, to effectively reduce header overheads of an RLC PDU and reduce air interface overheads.

In a possible design, the radio bearer is one of the following: a data radio bearer, a signaling radio bearer, or a computing radio bearer.

According to a seventh aspect, a communication method is provided. For example, the method is performed by a PDCP entity of a first communication device. The first communication device is, for example, a base station or a terminal. This is not limited in this application. The method includes the following steps. The PDCP entity of the first communication device obtains a PDCP SDU. The PDCP entity of the first communication device generates a PDCP PDU based on the PDCP SDU. The PDCP PDU includes a header and data. The data is a segment in the PDCP SDU, and the header includes a sequence number. The sequence number identifies the PDCP SDU. The header further includes a segment offset or an index. The segment offset indicates a byte offset of a first byte of the segment in the PDCP SDU, and the index identifies a number of the segment in segments of an RLC SDU.

Correspondingly, according to an eighth aspect, a communication method is provided. For example, the method is performed by a PDCP entity of a second communication device. The second communication device can communicate with a first communication device. The second communication device is, for example, a base station or a terminal. This is not limited in this application. The method includes the following steps. The PDCP entity of the second communication device obtains a plurality of PDCP PDUs. Each of the plurality of PDCP PDUs includes a header and data. The data is a segment in the PDCP SDU, and the header includes a sequence number. The sequence number identifies the PDCP SDU. The header further includes a segment offset or an index. The segment offset indicates a byte offset of a first byte of the segment in the PDCP SDU, and the index identifies a number of the segment in segments of an RLC SDU. Sequence numbers corresponding to the plurality of PDCP PDUs are the same. The PDCP entity of the second communication device generates one PDCP SDU based on the plurality of PDCP PDUs.

Based on the foregoing solution, it can be implemented that functions of an RLC layer are combined into a PDCP layer, so that all header overheads of the RLC layer are saved, and air interface overheads can be reduced.

In a possible design, a PDCP entity of the first communication device may directly deliver the PDCP PDU to a media access control entity. Correspondingly, the PDCP entity of the second communication device may also directly obtain the plurality of PDCP PDUs from the media access control entity.

In this way, a processing process of the RLC layer may be directly omitted, to reduce processing latency of the first communication device and a processing end.

According to a ninth aspect, a communication method is provided. The method may be performed by a first communication device. The first communication device is, for example, a base station or a terminal. This is not limited in this application. The method includes the following steps. A first PDCP entity of the first communication device sends a first PDCP data PDU. A second PDCP entity of the first communication device sends a first PDCP control PDU. The first PDCP control PDU is associated with the first PDCP data PDU, and the first PDCP entity is different from the second PDCP entity.

Correspondingly, according to a tenth aspect, a communication method is provided. The method may be performed by a second communication device. The second communication device can communicate with a first communication device. The second communication device is, for example, a terminal or a base station. This is not limited in this application. The method includes the following steps. The second communication device receives a first PDCP data PDU sent by a first PDCP entity of the first communication device. The second communication device receives a first PDCP control PDU sent by a second PDCP entity of the first communication device. The first PDCP control PDU is associated with the first PDCP data PDU, and the first PDCP entity is different from the second PDCP entity.

Based on the foregoing solution, it can be implemented that a PDCP data PDU and a PDCP control PDU are decoupled from each other, and the PDCP data PDU and the PDCP control PDU are sent using different PDCP entities. In this way, a PDCP entity can be supported in sending the PDCP data PDU in a TM mode, to reduce header overheads of the PDCP data PDU, and reduce air interface overheads.

In a possible design, the first communication device further obtains configuration information. The first communication device determines, based on the configuration information, that the first PDCP entity sends the first PDCP data PDU and the second PDCP entity sends the first PDCP control PDU. For example, if the first communication device is a terminal, and the second communication device is a base station, the second communication device generates the configuration information, and sends the configuration information to the first communication device, and the first communication device receives the configuration information from the second communication device. Alternatively, for example, if the second communication device is a terminal, and the first communication device is a base station, the first communication device generates the configuration information, and sends the configuration information to the second communication device, and the second communication device receives the configuration information from the first communication device.

In this way, it can be implemented that a network side configures decoupling between the PDCP data PDU and the PDCP control PDU for a terminal side, to improve reliability of the solution.

In a possible design, the configuration information may include: first indication information, indicating that a transmission entity of the PDCP data PDU of the first PDCP entity is separated from a transmission entity of the PDCP control PDU, or a transmission mode of the first PDCP entity is a transparent mode.

In this way, the network side may explicitly indicate that the transmission entity of the PDCP data PDU of the first PDCP entity is separated from the transmission entity of the PDCP control PDU, or may implicitly indicate that the transmission entity of the PDCP data PDU of the first PDCP entity is separated from the transmission entity of the PDCP control PDU, to improve flexibility of the solution.

In a possible design, the configuration information may further include at least one of the following: second indication information, indicating that the first PDCP entity is configured to transmit the PDCP data PDU; third indication information, indicating that the second PDCP entity is configured to transmit the PDCP control PDU; and fourth indication information, indicating that the PDCP control PDU transmitted by the second PDCP entity is associated with the PDCP data PDU transmitted by the first PDCP entity.

In this way, the network side may further more clearly indicate a manner in which the transmission entity of the PDCP data PDU on the terminal side is separated from the transmission entity of the PDCP control PDU, to improve the reliability of the solution.

In a possible design, the method further includes the following steps. A third PDCP entity of the first communication device sends a second PDCP data PDU. A fourth PDCP entity of the first communication device sends a second PDCP control PDU. Correspondingly, the second communication device receives the second PDCP data PDU sent by the third PDCP entity of the first communication device. The second communication device receives the second PDCP control PDU sent by the fourth PDCP entity of the first communication device. The second PDCP control PDU is associated with the second PDCP data PDU, and any two of the third PDCP entity, the fourth PDCP entity, the first PDCP entity, and the second PDCP entity are different.

In other words, an association relationship between the PDCP entity transmitting the PDCP data PDU and the PDCP entity transmitting the PDCP control PDU may be a one-to-one association relationship.

In a possible design, the method further includes the following steps. A third PDCP entity of the first communication device sends a second PDCP data PDU. The second PDCP entity of the first communication device sends a second PDCP control PDU. Correspondingly, the second communication device receives the second PDCP data PDU sent by the third PDCP entity of the first communication device. The second communication device receives the second PDCP control PDU sent by the second PDCP entity of the first communication device. The second PDCP control PDU is associated with the second PDCP data PDU, and any two of the third PDCP entity, the first PDCP entity, and the second PDCP entity are different.

In other words, an association relationship between the PDCP entity transmitting the PDCP data PDU and the PDCP entity transmitting the PDCP control PDU may be a many-to-one association relationship.

In a possible design, when the second PDCP entity of the first communication device sends both the first PDCP control PDU and the second PDCP control PDU, the first PDCP control PDU may carry an identifier of the first PDCP entity. The second PDCP control PDU carries an identifier of the third PDCP entity or an identifier of the second PDCP data PDU.

In this way, it can be convenient for a receive end to distinguish between different PDCP control PDUs in the second PDCP entity, to improve reliability of communication.

According to an eleventh aspect, a communication method is provided. The method may be performed by a first communication device. The first communication device is, for example, a base station or a terminal. This is not limited in this application. The method includes the following steps. A first PDCP entity of the first communication device sends a first PDCP data PDU. An RRC entity, a NAS entity, a SDAP entity, an RLC entity, a MAC entity, or a physical layer entity of the first communication device sends a first PDCP control PDU. The first PDCP control PDU is associated with the first PDCP data PDU.

Correspondingly, according to a twelfth aspect, a communication method is provided. The method may be performed by a second communication device. The second communication device can communicate with a first communication device. The second communication device is, for example, a terminal or a base station. This is not limited in this application. The method includes the following steps. The second communication device receives a first PDCP data PDU sent by a first PDCP entity of the first communication device. The second communication device receives a first PDCP control PDU sent by an RRC entity, a NAS entity, a SDAP entity, an RLC entity, a MAC entity, or a physical layer entity of the first communication device. The first PDCP control PDU is associated with the first PDCP data PDU.

Based on the foregoing solution, it can be implemented that a PDCP data PDU and a PDCP control PDU are decoupled from each other, and the PDCP control PDU is sent using an entity at another layer. In this way, a PDCP entity can be supported in sending the PDCP data PDU in a TM mode, to reduce header overheads of the PDCP data PDU, and reduce air interface overheads.

According to a thirteenth aspect, a communication method is provided. The method may be performed by a first communication device. The first communication device is, for example, a base station or a terminal. This is not limited in this application. The method includes the following steps. The first communication device receives a data packet. Transmission modes of a PDCP entity and an RLC entity that are of the first communication device each are a transparent mode. The first communication device determines, based on a time domain position at which the data packet is received and a mapping relationship between a sequence number and the time domain position, the sequence number corresponding to the data packet.

Correspondingly, according to a fourteenth aspect, a communication method is provided. The method may be performed by a second communication device. The second communication device can communicate with a first communication device. The second communication device is, for example, a terminal or a base station. This is not limited in this application. The method includes the following steps. The second communication device determines, based on a mapping relationship between a sequence number and a time domain position and the sequence number corresponding to a data packet, the time domain position corresponding to the data packet. Transmission modes of a PDCP entity and an RLC entity that are of the second communication device each are a transparent mode. The second communication device sends the first data packet at the time domain position corresponding to the data packet.

Based on the foregoing solution, it can be implemented that both the PDCP entity and the RLC entity support the TM, and the first communication device can obtain SNs corresponding to a PDCP data PDU and an RLC data PDU, so that data transmission reliability is ensured and air interface overheads are reduced.

In this embodiment of this application, a mapping operation performed on the sequence number and the time domain position may be performed by an entity corresponding to any protocol layer. For example,
in a first possible design, a media access control entity of the first communication device may transfer the time domain position of the data packet to a PDCP entity of the first communication device. The PDCP entity of the first communication device determines, based on the time domain position at which the data packet is received by the media access control entity and the mapping relationship between the sequence number and the time domain position, the sequence number corresponding to the data packet.

In a second possible design, a media access control entity of the first communication device may determine, based on the time domain position at which the data packet is received and the mapping relationship between the sequence number and the time domain position, the sequence number corresponding to the data packet, so that the media access control entity of the first communication device transfers, to the PDCP entity of the first communication device, the sequence number corresponding to the data packet.

In a third possible design, the PDCP entity of the second communication device may also transfer, to a media access control entity of the second communication device, the sequence number corresponding to the data packet, so that the media access control entity of the second communication device determines, based on the mapping relationship between the sequence number and the time domain position and the sequence number corresponding to the data packet, the time domain position corresponding to the data packet.

In a fourth possible design, the PDCP entity of the second communication device may determine, based on the mapping relationship between the sequence number and the time domain position and the sequence number corresponding to the data packet, the time domain position corresponding to the data packet, so that the PDCP entity of the second communication device transfers, to a media access control entity of the second communication device, the time domain position corresponding to the data packet.

It should be understood that the foregoing four manners are merely examples but not limitations.

In a possible design, the first communication device may obtain the mapping relationship between the sequence number and the time domain position from a network device. For example, if the first communication device is a terminal, a base station may send the mapping relationship between the sequence number and the time domain position, so that the first communication device receives the mapping relationship between the sequence number and the time domain position from the base station.

According to a fifteenth aspect, a communication apparatus is provided. The apparatus includes a transceiver module, configured to communicate with another apparatus other than the apparatus; and a processing module, configured to control a communication module to perform the method according to the first aspect or any possible design of the first aspect, the second aspect or any possible design of the second aspect, the third aspect or any possible design of the third aspect, the fourth aspect or any possible design of the fourth aspect, the fifth aspect or any possible design of the fifth aspect, the sixth aspect or any possible design of the sixth aspect, the seventh aspect or any possible design of the seventh aspect, the eighth aspect or any possible design of the eighth aspect, the ninth aspect or any possible design of the ninth aspect, the tenth aspect or any possible design of the tenth aspect, the eleventh aspect or any possible design of the eleventh aspect, the twelfth aspect or any possible design of the twelfth aspect, the thirteenth aspect or any possible design of the thirteenth aspect, or the fourteenth aspect or any possible design of the fourteenth aspect.

According to a sixteenth aspect, a communication apparatus is provided. The apparatus includes a processor and a memory. The processor is coupled to the memory. The memory is configured to store computer-executable instructions, and the processor is configured to execute the computer-executable instructions stored in the memory, to enable the communication apparatus to perform the method according to the first aspect or any possible design of the first aspect, the second aspect or any possible design of the second aspect, the third aspect or any possible design of the third aspect, the fourth aspect or any possible design of the fourth aspect, the fifth aspect or any possible design of the fifth aspect, the sixth aspect or any possible design of the sixth aspect, the seventh aspect or any possible design of the seventh aspect, the eighth aspect or any possible design of the eighth aspect, the ninth aspect or any possible design of the ninth aspect, the tenth aspect or any possible design of the tenth aspect, the eleventh aspect or any possible design of the eleventh aspect, the twelfth aspect or any possible design of the twelfth aspect, the thirteenth aspect or any possible design of the thirteenth aspect, or the fourteenth aspect or any possible design of the fourteenth aspect.

According to a seventeenth aspect, a chip is provided. The chip includes a logic circuit and an input/output interface. The input/output interface is configured to receive a signal from another communication apparatus other than the chip, and transmit the signal to the logic circuit, or send a signal from the logic circuit to another communication apparatus other than the chip. The logic circuit is configured to implement the method according to the first aspect or any possible design of the first aspect, the second aspect or any possible design of the second aspect, the third aspect or any possible design of the third aspect, the fourth aspect or any possible design of the fourth aspect, the fifth aspect or any possible design of the fifth aspect, the sixth aspect or any possible design of the sixth aspect, the seventh aspect or any possible design of the seventh aspect, the eighth aspect or any possible design of the eighth aspect, the ninth aspect or any possible design of the ninth aspect, the tenth aspect or any possible design of the tenth aspect, the eleventh aspect or any possible design of the eleventh aspect, the twelfth aspect or any possible design of the twelfth aspect, the thirteenth aspect or any possible design of the thirteenth aspect, or the fourteenth aspect or any possible design of the fourteenth aspect.

According to an eighteenth aspect, a computer-readable storage medium is provided. The storage medium stores a computer program or instructions. When the computer program or the instructions are executed by a communication apparatus, the method according to the first aspect or any possible design of the first aspect, the second aspect or any possible design of the second aspect, the third aspect or any possible design of the third aspect, the fourth aspect or any possible design of the fourth aspect, the fifth aspect or any possible design of the fifth aspect, the sixth aspect or any possible design of the sixth aspect, the seventh aspect or any possible design of the seventh aspect, the eighth aspect or any possible design of the eighth aspect, the ninth aspect or any possible design of the ninth aspect, the tenth aspect or any possible design of the tenth aspect, the eleventh aspect or any possible design of the eleventh aspect, the twelfth aspect or any possible design of the twelfth aspect, the thirteenth aspect or any possible design of the thirteenth aspect, or the fourteenth aspect or any possible design of the fourteenth aspect is implemented.

According to a nineteenth aspect, a computer program product is provided. When the computer program product runs on a computer, the method according to the first aspect or any possible design of the first aspect, the second aspect or any possible design of the second aspect, the third aspect or any possible design of the third aspect, the fourth aspect or any possible design of the fourth aspect, the fifth aspect or any possible design of the fifth aspect, the sixth aspect or any possible design of the sixth aspect, the seventh aspect or any possible design of the seventh aspect, the eighth aspect or any possible design of the eighth aspect, the ninth aspect or any possible design of the ninth aspect, the tenth aspect or any possible design of the tenth aspect, the eleventh aspect or any possible design of the eleventh aspect, the twelfth aspect or any possible design of the twelfth aspect, the thirteenth aspect or any possible design of the thirteenth aspect, or the fourteenth aspect or any possible design of the fourteenth aspect is implemented.

### BRIEF DESCRIPTION OF DRAWINGS

FIG. 1 is a schematic diagram of a user plane protocol stack in an NR protocol;
FIG. 2 is a schematic diagram of RLC SDU segments;
FIG. 3A to FIG. 3E are schematic diagrams of formats of an RLC data PDU in an unacknowledged mode;
FIG. 4A and FIG. 4B are schematic diagrams of two formats of a PDCP data PDU;
FIG. 5 is a schematic diagram of an architecture of a communication system to which embodiments of this application are applicable;
FIG. 6A is a flowchart of a communication method according to an embodiment of this application;
FIG. 6B is a schematic diagram of a possible format of an RLC PDU according to an embodiment of this application;
FIG. 7 is a flowchart of another communication method according to an embodiment of this application;
FIG. 8A is a flowchart of another communication method according to an embodiment of this application;
FIG. 8B is a schematic diagram of another possible format of an RLC PDU according to an embodiment of this application;
FIG. 9A is a flowchart of another communication method according to an embodiment of this application;
FIG. 9B and FIG. 9C are schematic diagrams of two possible formats of a PDCP data PDU according to an embodiment of this application;
FIG. 9D to FIG. 9F are schematic diagrams of three possible formats of a PDCP control PDU according to an embodiment of this application;
FIG. 10A is a schematic diagram of a possible format of a PDCP PDU according to an embodiment of this application;
FIG. 10B is a flowchart of another communication method according to an embodiment of this application;
FIG. 10C is a flowchart of another communication method according to an embodiment of this application;
FIG. 11A is a flowchart of another communication method according to an embodiment of this application;
FIG. 11B is a schematic diagram of a single-carrier transmission scenario according to an embodiment of this application;
FIG. 11C is a schematic diagram of a dual-carrier transmission scenario according to an embodiment of this application;
FIG. 12 is a schematic diagram of a structure of a possible communication apparatus according to an embodiment of this application;
FIG. 13 is a schematic diagram of a structure of another possible communication apparatus according to an embodiment of this application; and
FIG. 14 is a schematic diagram of a structure of a possible chip according to an embodiment of this application.

### DESCRIPTION OF EMBODIMENTS

In a new radio (New radio, NR) protocol, devices that communicate with each other have a specific protocol layer structure, and communicate based on the protocol layer structure.

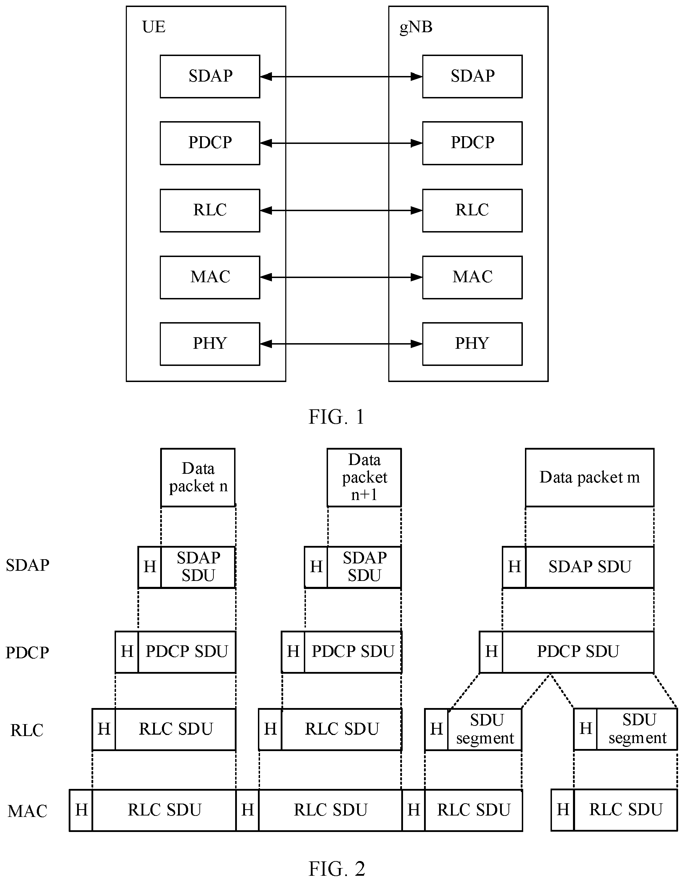

For example, user equipment (user equipment, UE) communicates with a base station (gNB). FIG. 1 is a schematic diagram of a user plane protocol stack for communication between the UE and the gNB. The user plane protocol stack includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, a physical layer (physical layer, PHY), and the like from top to bottom (where a control plane protocol stack is similar to the user plane protocol stack, and only the SDAP layer needs to be replaced with a radio resource control (radio resource control, RRC) layer). During data transmission, a protocol at each layer is executed by an entity of a corresponding layer. For ease of understanding, in the following embodiments of this application, an entity that executes a protocol at the SDAP layer is referred to as a SDAP entity, an entity that executes a protocol at the PDCP layer is referred to as a PDCP entity, an entity that executes a protocol at the RLC layer is referred to as an RLC entity, an entity that executes a protocol at the MAC layer is referred to as a MAC entity, an entity that executes a protocol at the PHY layer is referred to as a PHY entity, and so on.

When the data transmission is performed between the UE and the gNB, data needs to pass through layers of the UE and the gNB in sequence, and be subject to corresponding processing at each layer. Uplink transmission is used as an example. Processing of the data at layers of a UE side includes the following.
(1) The SDAP entity on the UE side receives a data packet delivered by an application (application, APP) layer, adds a SDAP header (header) to the data packet, to finally form a protocol data unit (protocol data unit, PDU) of the SDAP layer, which is referred to as a SDAP PDU for short, and transfers the SDAP PDU to the PDCP entity.
(2) The PDCP entity receives the SDAP PDU, and uses the SDAP PDU as a service data unit (service data unit, SDU) of the PDCP layer, which is referred to as a PDCP SDU for short. After processing of the PDCP entity, a PDCP header is added, to finally form a PDCP PDU, and the PDCP PDU is transferred to the RLC entity.
(3) The RLC entity receives the PDCP PDU, and uses the PDCP PDU as a SDU of the RLC layer, which is referred to as an RLC SDU for short. After processing of the RLC entity, an RLC header is added, to finally form a PDU of the RLC layer, which is referred to as an RLC PDU for short, and the RLC PDU is transferred to the MAC entity.
   When processing the RLC SDU, the RLC entity may further segment the RLC SDU to generate a plurality of RLC SDU segments (segments), then add an RLC header to each segment to finally form a plurality of RLC PDUs, and deliver the plurality of RLC PDUs to the MAC entity, as shown in FIG. 2.
(4) The MAC entity receives the RLC PDU, and uses the RLC PDU as a SDU of the MAC layer, which is referred to as a MAC SDU for short. After processing of the MAC entity, a MAC subheader (subheader) is added, to generate a MAC subPDU, a plurality of MAC subPDUs (where if a plurality of APP data packets need to be sent at the same time, MAC subPDUs corresponding to a plurality of MAC SDUs are generated; and if a MAC CE needs to be sent, a MAC subPDU corresponding to the MAC CE is generated) are cascaded to generate a PDU of the MAC layer, which is referred to as a MAC PDU for short, and the MAC PDU is delivered to the PHY entity.
(5) After receiving the MAC PDU from the MAC entity, the PHY entity performs PHY entity encoding and sends the encoded MAC PDU to the base station through an air interface.

A transmission mode of the RLC entity includes the following three types.
(1) Unacknowledged mode (unacknowledged mode, UM): A sending entity adds necessary control protocol overheads to a higher-layer PDU, and then performs transmission without ensuring delivery to a peer entity. In addition, a retransmission protocol is not used. After marking received wrong data as an error, a receiving entity submits the error, or directly discards the wrong data and reports the error to a higher layer. Because the RLC PDU includes a sequence number (sequence number, SN), integrity of the higher-layer PDU can be detected. Services of the UM include cell broadcasts and IP calls.
(2) Transparent mode (transparent mode, TM): A sending entity does not add any extra control protocol overheads to higher-layer data. Whether to perform segmentation is determined only based on a service type. If an error occurs in a PDU received by a receiving entity, based on a configuration, the receiving entity submits the error after marking, or directly discards the PDU and reports the error to a higher layer. A real-time voice service usually uses an RLC transparent mode.
(3) Acknowledged mode (acknowledged mode, AM): A transmitter side adds necessary control protocol overheads to higher-layer data and performs transmission, and ensures delivery to a peer entity. Because an RLC AM mode has an automatic repeat request (auto repeat request, ARQ) capability, if the RLC receives a wrong RLC PDU, an RLC of the transmitter is notified to retransmit the PDU. Because the RLC PDU includes information about a sequence number, sequential or out-of-order data delivery to a higher layer is supported. The AM mode is a standard mode for transmitting packet data such as browsing websites and downloading emails.

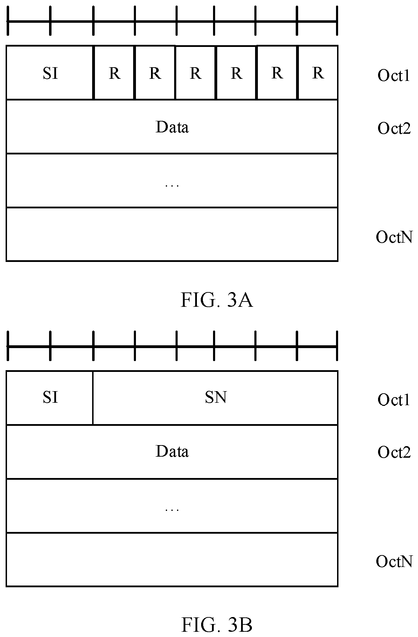

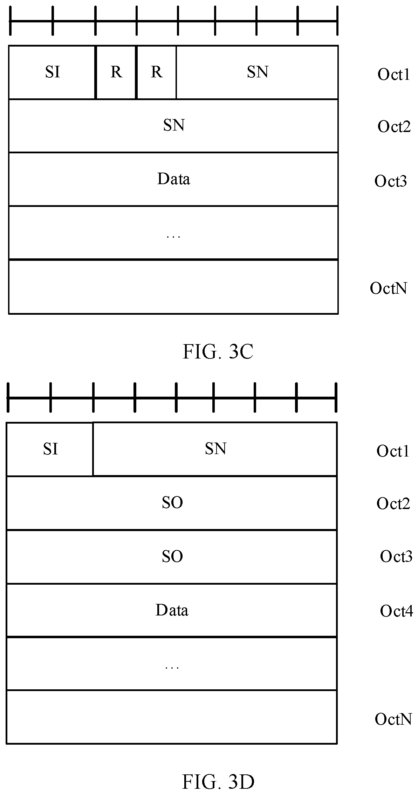

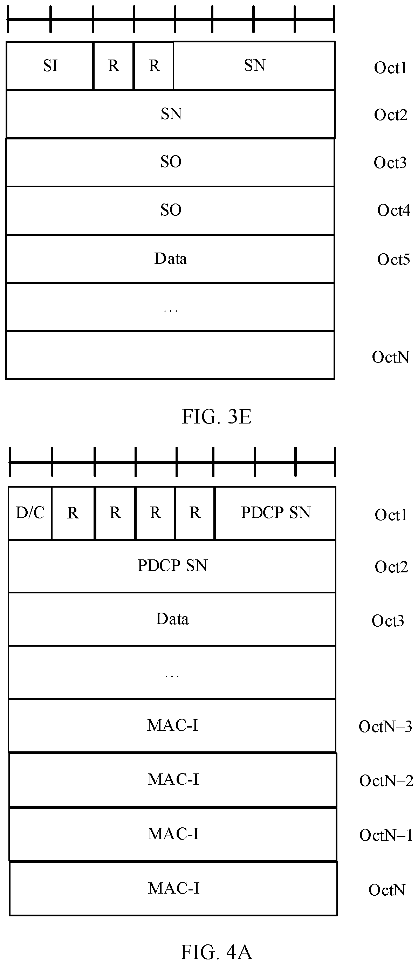

For transmission of a data packet in a URLLC service scenario, the RLC entity usually uses the UM. Refer to FIG. 3A to FIG. 3D. A radio link control data protocol data unit (RLC data PDU) of the UM supports the following formats.
(1) As shown in FIG. 3A, the RLC data PDU includes a complete RLC SDU.
(2) As shown in FIG. 3B, the RLC data PDU includes a 6-bit SN (where the RLC data PDU does not have a segment offset (SO)).
(3) As shown in FIG. 3C, the RLC data PDU includes a 12-bit SN (where the RLC data PDU does not have a SO).
(4) As shown in FIG. 3D, the RLC data PDU includes a 6-bit SN and has a SO.
(5) As shown in FIG. 3E, the RLC data PDU includes a 12-bit SN and has a SO.

Meanings of the foregoing fields are as follows.

R: Reserved bit.

SN: The SN is a number of a data packet corresponding to an RLC SDU. Generally, one data packet delivered by the APP layer corresponds to one SN, and an SN of the RLC layer may be generally referred to as an RLC SN.

SO: A unit is byte (byte). After a complete data packet corresponding to a specific RLC SN is segmented, the SO indicates a position of a segment in the complete RLC SN, for example, a byte offset of a first byte of the segment (for example, a SO of a first segment is "0000000000000000") in a PDCP SDU, and a length is 16 bits (bits).

Data (data): The data is upper-layer data, for example, application layer data, a service data adaptation protocol data protocol data unit (SDAP data PDU), a service data adaptation protocol control protocol data unit (SDAP control PDU), or the like.

Segmentation information (Segmentation Information, SI): The segmentation information further indicates a type of an RLC PDU.

Meanings corresponding to different values of the SI are as follows.
00: Data of the RLC PDU includes all bytes of an RLC SDU.
01: Data of the RLC PDU includes a first segment of an RLC SDU.
10: Data of the RLC PDU includes a last segment of an RLC SDU.
11: Data of the RLC PDU neither includes a first segment of an RLC SDU nor includes a last segment of the RLC SDU.
Oct: The octal means "octal".

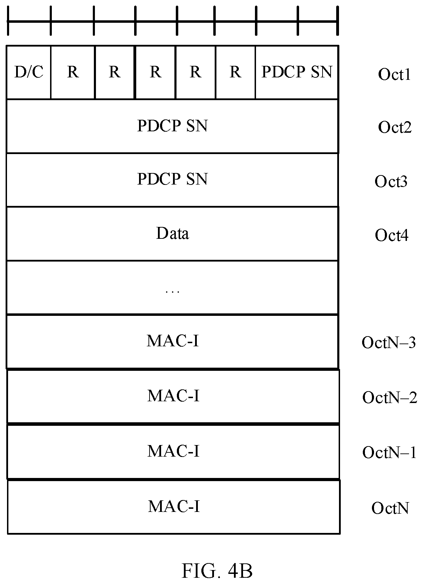

From the perspective of the PDCP layer, a packet data convergence protocol data unit (PDCP data PDU) supports the following two formats.
(1) As shown in FIG. 4A, the PDCP data PDU has a 12-bit PDCP SN.
(2) As shown in FIG. 4B, the PDCP data PDU has an 18-bit PDCP SN.

It can be learned from FIG. 4A and FIG. 4B that, in addition to carrying the upper-layer data, the PDCP data PDUs in the foregoing two formats further include extra header overheads of 6 bytes and 7 bytes respectively.

Meanings of fields are as follows.
D/C: The D/C indicates a type of the PDCP PDU. The PDCP PDU has two types: a "PDCP data PDU" (that is, carrying APP data) and a "packet data convergence protocol control protocol data unit PDCP control PDU" (that is, carrying control signaling of the PDCP layer itself);
R: R represents a reserved bit.
SN: The SN indicates an SN corresponding to a data packet that is currently sent and that is in the PDCP data PDU. The SN of the PDCP data PDU is the same as an SN of an RLC SDU corresponding to the PDCP data PDU, and an SN of the PDCP layer may be referred to as a PDCP SN.
Data: The data is upper-layer data, for example, application layer data, a SDAP data PDU, a SDAP control PDU, or the like.
MAC-I: The MAC-I is an integrity protection field, and is used by a receive end to perform integrity check.

It can be learned from the foregoing description that, because an NR protocol stack is divided into a plurality of layers, and processing at each layer is complex, extra header overheads (such as an SN and a SO) are increased, and large air interface overheads are caused. In addition, serial processing is performed at layers. Therefore, long processing latency is further caused. For example, during uplink transmission, packet encapsulation latency on a UE side increases, and therefore, packet decapsulation latency on a gNB side increases. During downlink transmission, packet encapsulation latency on a gNB side increases, and therefore, packet decapsulation latency on a UE side increases.

In view of this, the technical solutions in embodiments of this application are provided, to simplify a protocol layer structure between devices that communicate with each other, and reduce processing latency of a data packet on the device and reduce air interface overheads.

Embodiments of this application are applied to various communication systems, including but not limited to the following: a satellite communication system, internet of things (internet of things, IoT), a narrow band internet of things (narrow band internet of things, NB-IoT) system, a global system for mobile communication (global system for mobile communication, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, a long term evolution (long term evolution, LTE) system, and a 5^{th} generation mobile network (5th generation mobile network, 5G) system, specifically, for example, 5G new radio (new radio, NR); and three application scenarios of a 5G mobile communication system: an enhanced mobile broadband (enhanced mobile broadband, eMBB) scenario, an ultra-reliable low-latency communication (ultra-reliable low-latency communication, uRLLC) scenario, and a massive machine type communication (massive machine type communication, mMTC) scenario. Embodiments of this application are applied to various communication systems, including but not limited to the following: a device-to-device (device-to-device, D2D) communication system, a machine to machine (machine to machine, M2M) communication system, an internet of vehicles communication system, a 6^{th} generation mobile network (6th generation mobile network, 6G) system, a future evolved communication system, or another communication system. This is not limited in embodiments of this application.

Further, embodiments of this application are not only applicable to communication between a base station and a terminal, but also applicable to communication between base stations, communication between terminals, communication between internet of vehicles, internet of things, industrial internets, or the like.

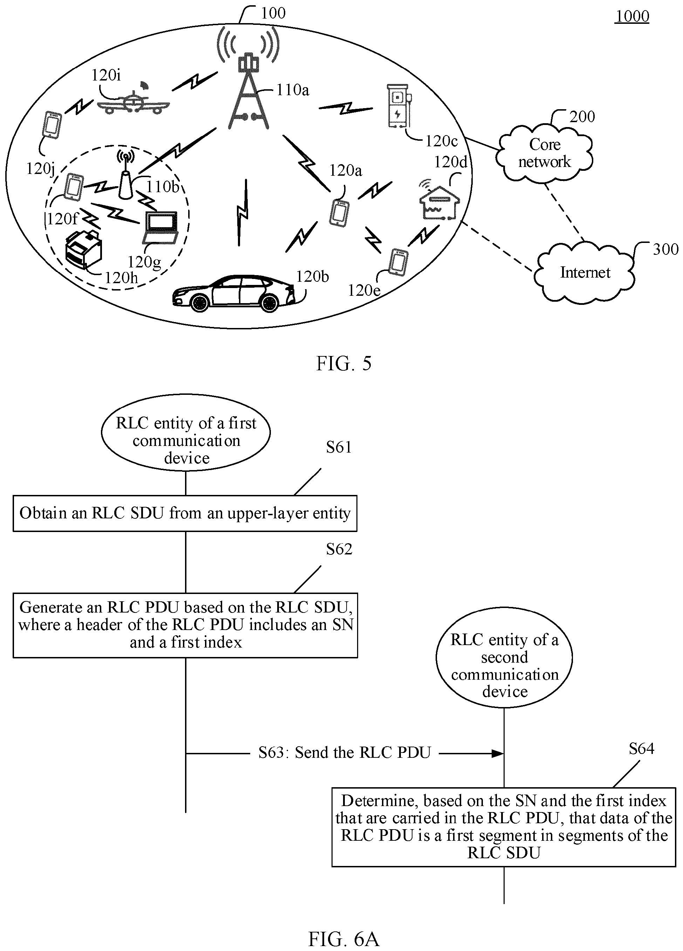

For example, FIG. 5 is a schematic diagram of an architecture of a communication system 1000 to which embodiments of this application are applicable. As shown in FIG. 5, the communication system includes a radio access network 100 and a core network 200. Optionally, the communication system 1000 may further include an internet 300. The radio access network 100 may include at least one radio access network device (for example, 110a and 110b in FIG. 5), and may further include at least one terminal (for example, 120a to 120j in FIG. 5). The terminal is connected to the radio access network device in a wireless manner, and the radio access network device is connected to a core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 5 is merely a schematic diagram. The communication system may further include other network devices, for example, a wireless relay device and a wireless backhaul device, which are not shown in FIG. 5.

The radio access network device may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a next generation NodeB in a 6^{th} generation (6^{th} generation, 6G) mobile communication system, a base station in a future mobile communication system, an access node in a Wi-Fi system, or the like. The radio access network device may alternatively be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) that are of the base station, and may further complete functions of a service data adaptation protocol (service data adaptation protocol, SDAP). The DU completes functions of a radio link control (Radio link control, RLC) layer and a media access control (medium access control, MAC) layer that are of the base station, and may further complete functions of a part or all of physical layers. For specific descriptions of the foregoing protocol layers, refer to related technical specifications of a 3^{rd} generation partnership project (3^{rd} generation partnership project, 3GPP). The radio access network device may be a macro base station (for example, 110a in FIG. 5), or may be a micro base station or an indoor base station (for example, 110b in FIG. 5), or may be a relay node, a donor node, or the like. A specific technology and a specific device form that are used by the radio access network device are not limited in embodiments of this application. For ease of description, the following uses an example in which the base station is used as the radio access network device for description.

The terminal may also be referred to as a terminal device, user equipment (user equipment, UE), a mobile station, a mobile terminal, or the like. The terminal device may be widely applied to various scenarios such as device-to-device (device-to-device, D2D) communication, vehicle to everything (vehicle to everything, V2X) communication, machine-type communication (machine-type communication, MTC), internet of things (internet of things, IoT), virtual reality, augmented reality, industrial control, autonomous driving, remote medical, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be located at fixed positions, or may be mobile. The base station and the terminal may be deployed on land, including an indoor or outdoor device, a handheld device, or an in-vehicle device. The base station and the terminal may alternatively be deployed on a water surface. The base station and the terminal may alternatively be deployed on an airplane, in a balloon, and on an artificial satellite. Embodiments of this application impose no limitation on application scenarios of the base station and the terminal device.

Roles of the base station and the terminal may be relative. For example, a helicopter or an uncrewed aerial vehicle 120i in FIG. 5 may be configured as a mobile base station. For the terminal 120j that accesses the radio access network 100 through 120i, the terminal 120i is the base station. However, for the base station 110a, 120i is a terminal, to be specific, 110a and 120i communicate with each other by using a wireless air interface protocol. Certainly, 110a and 120i may alternatively communicate with each other by using an interface protocol between base stations. In this case, relative to 110a, 120i is also a base station. Therefore, both the base station and the terminal may be collectively referred to as communication apparatuses. 110a and 110b in FIG. 5 may be referred to as communication apparatuses having a function of the base station, and 120a to 120j in FIG. 5 may be referred to as communication apparatuses having a function of the terminal.

Communication between a base station and a terminal, between base stations, and between terminals may be performed using a licensed frequency spectrum, or may be performed using an unlicensed frequency spectrum, or may be performed using both a licensed spectrum and an unlicensed spectrum. Communication may be performed using a frequency spectrum below 6 gigahertz (gigahertz, GHz), may be performed using a frequency spectrum above 6 GHz, or may be performed using both a frequency spectrum below 6 GHz and a frequency spectrum above 6 GHz. A frequency spectrum resource used for wireless communication is not limited in embodiments of this application.

In embodiments of this application, a function of the base station may be performed by a module (such as a chip) in the base station, or may be performed by a control subsystem including the function of the base station. The control subsystem including the function of the base station may be a control center in the foregoing application scenarios such as the smart grid, the industrial control, the smart transportation, and the smart city. A function of the terminal may also be performed by a module (such as a chip or a modem) in the terminal, or may be performed by an apparatus including the function of the terminal.

It should be noted that, FIG. 5 is merely an example of some communication scenarios to which the technical solutions of this application are applicable, but is not a specific limitation. Actually, there may be other scenarios. In addition, a quantity of base stations and a quantity of terminals in FIG. 5 are merely examples, and quantities of the base stations and the terminals are not limited in this application.

The following describes the technical solutions in embodiments of this application in detail with reference to the accompanying drawings.

In a possible embodiment, an index may be used for replacing a SO.

FIG. 6A is a flowchart of a communication method according to an embodiment of this application. In the following description process, an example in which the method is applied to the application scenario shown in FIG. 5 is used. A procedure of the method is described as follows.

S61: An RLC entity of a first communication device obtains an RLC SDU from an upper-layer entity.

The first communication device may be any device, for example, a base station or a terminal in the scenario shown in FIG. 5. This is not limited in this application.

For example, the upper-layer entity may be a PDCP entity. That the RLC entity of the first communication device obtains the RLC SDU from the PDCP entity may also be described as that the RLC entity of the first communication device obtains a PDCP PDU from the PDCP entity.

S62: The RLC entity of the first communication device generates an RLC PDU based on the RLC SDU.

Specifically, the RLC entity of the first communication device may segment the RLC SDU to generate a plurality of RLC SDU segments, and then add an RLC header to each segment, to finally form a plurality of RLC PDUs. Each RLC PDU includes two parts: a header and data. The data of each RLC PDU is a segment in data of the RLC SDU. The header of each RLC PDU includes an SN and an index. The SN identifies the RLC SDU (that is, indicates that the data of the RLC PDU is a part of the data of the RLC SDU, where for details, reference may be made to the foregoing definition description of the SN). The index identifies a number of a segment (that is, the data of each RLC PDU) that corresponds to each RLC PDU and that is in segments of the RLC SDU. Different segments in the RLC SDU correspond to different indexes respectively. One RLC PDU is used as an example. Data of a first RLC PDU is a first segment in the data of the RLC SDU, and a first index in a header of the first RLC PDU identifies that the data of the first RLC PDU is the first segment in the segments of the RLC SDU.

For example, the RLC entity of the first communication device segments an RLC SDU whose SN is 1 to generate four RLC SDU segments (a segment 1, a segment 2, a segment 3, and a segment 4) in total. After an RLC header is added to the segment 1, the segment 1 becomes an RLC PDU 1, where an SN carried in the RLC PDU 1 is 1, and a value of an index is 00 (which indicates that data in the RLC PDU 1 is a first segment in the RLC SDU whose SN is 1). After an RLC header is added to the segment 2, the segment 2 becomes an RLC PDU 2, where an SN carried in the RLC PDU 2 is 1, and a value of an index is 01 (which indicates that data in the RLC PDU 2 is a second segment in the RLC SDU whose SN is 1). After an RLC header is added to the segment 3, the segment 3 becomes an RLC PDU 3, where an SN carried in the RLC PDU 3 is 1, and a value of an index is 10 (which indicates that data in the RLC PDU 3 is a third segment in the RLC SDU whose SN is 1). After an RLC header is added to the segment 4, the segment 4 becomes an RLC PDU 4, where an SN carried in the RLC PDU 4 is 1, and a value of an index is 11 (which indicates that data in the RLC PDU 4 is a fourth segment in the RLC SDU whose SN is 1).

It should be understood that, certainly, segmentation may not be performed during actual application, and therefore, segmentation identification is not involved. Therefore, this embodiment does not describe a case in which the segmentation is not performed. This embodiment mainly uses a case in which the segmentation is performed as an example.

S63: The RLC entity of the first communication device sends the RLC PDU, and correspondingly, an RLC entity of a second communication device receives the RLC PDU.

It should be understood that actual transmission further includes processing by a lower-layer entity (such as a MAC entity or a PHY entity). For example, a process in which the RLC entity of the first communication device sends the RLC PDU includes the following. An entity at an RLC layer transfers the RLC PDU to a MAC for processing to obtain a MAC PDU. The MAC entity transfers the MAC PDU to a PHY entity, and the PHY entity performs encoding and sends the MAC PDU through an air interface. Correspondingly, a process in which the RLC entity of the second communication device receives the RLC PDU includes the following. A PHY entity of the second communication device decodes a received data packet to obtain the MAC PDU. The PHY entity transfers the MAC PDU to a MAC entity, the MAC entity decapsulates the MAC PDU to obtain the RLC PDU, and the MAC entity transfers the RLC PDU to the RLC entity. It should be understood that, if there are a plurality of RLC PDUs, the plurality of RLC PDUs are sent in sequence.

S64: The RLC entity of the second communication device determines, based on the SN and the first index, that the data of the RLC PDU is the first segment in the segments of the RLC SDU.

The second communication device is any device that can communicate with the first communication device. For example, if the first communication device is any base station in the scenario shown in FIG. 5, the second communication device may be a terminal communicating with the base station or another base station communicating with the base station. Alternatively, for example, if the first communication device is any terminal in the scenario shown in FIG. 5, the second communication device may be a base station communicating with the terminal or another terminal communicating with the terminal. This is not limited in this application.

The RLC entity of the second communication device may determine, based on an SN of each RLC PDU, that data of the RLC PDU is a segment of the RLC SDU, and determine, based on an index, the specific segment of the RLC SDU that the data of the RLC PDU is.

The four segments listed in S62 are still used as an example. After receiving the RLC PDU 1, the RLC entity of the second communication device determines, based on that the SN carried in the RLC PDU 1 is 1 and the index carried in the RLC PDU 1 is 00, that the data in the RLC PDU 1 is the first segment in the RLC SDU whose SN is 1. After receiving the RLC PDU 2, the RLC entity of the second communication device determines, based on that the SN carried in the RLC PDU 2 is 1 and the index carried in the RLC PDU 2 is 01, that the data in the RLC PDU 2 is the second segment in the RLC SDU whose SN is 1. After receiving the RLC PDU 3, the RLC entity of the second communication device determines, based on that the SN carried in the RLC PDU 3 is 1 and the index carried in the RLC PDU 3 is 10, that the data in the RLC PDU 3 is the third segment in the RLC SDU whose SN is 1. After receiving the RLC PDU 4, the RLC entity of the second communication device determines, based on that the SN carried in the RLC PDU 1 is 1 and the index carried in the RLC PDU 4 is 11, that the data in the RLC PDU 4 is the fourth segment in the RLC SDU whose SN is 1.

It should be understood that, during specific implementation, the index may be further defined as another name, for example, a segment identifier or a segment number, and the name falls within the protection scope of this application provided that the name can identify a specific segment in the RLC SDU that data in an RLC PDU is.

In the foregoing solution, a SO in an original RLC PDU is replaced with an index, and the index indicates a specific segment in the RLC SDU that data in each RLC PDU is. This can reduce header overheads of the RLC PDU and ensure data transmission reliability, to reduce air interface overheads. For example, the four segments in the foregoing example only need to be indicated using an index of 00, an index of 01, an index of 10, and an index of 11 respectively, and only header overheads of 2 bits are required. However, in an original SN protocol, when a SO is used to identify an address of each segment, a SO of each RLC SDU needs header overheads of 16 bits.

Optionally, a value of the first index does not exceed a threshold. In other words, overheads corresponding to the first index do not exceed preset bits.

For example, if it is set that one RLC SDU allows a maximum of 16 segments, the value of the first index may be 0 to 15, and a corresponding binary is represented as "1111". In this case, the first index occupies a maximum of 4 bits.

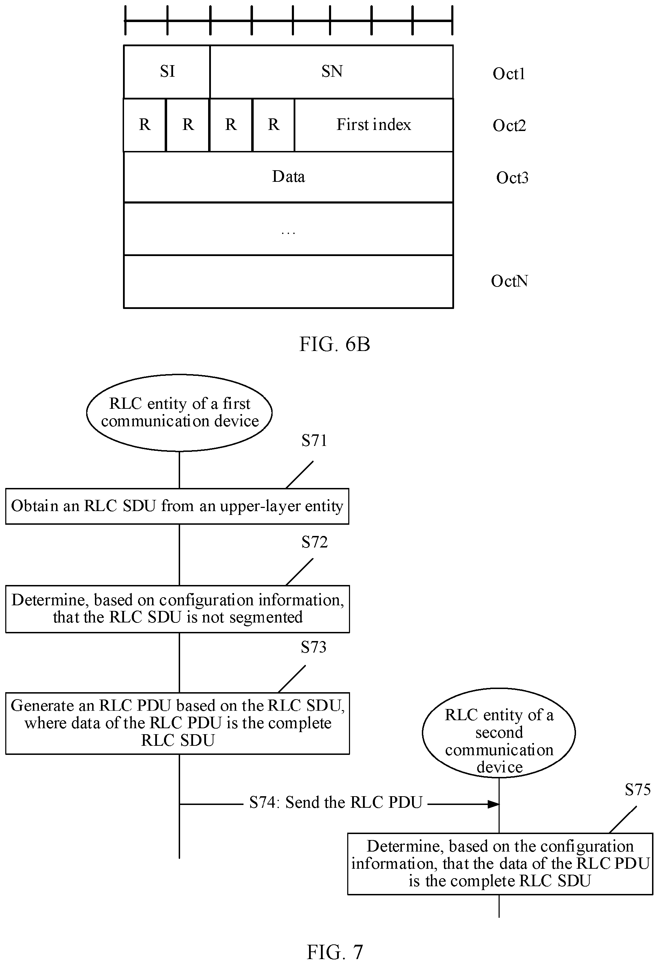

As shown in FIG. 6B, a possible format design of the RLC PDU is provided as an example. A "first index" field replaces a SO field in an original protocol. In comparison with the format design of the RLC PDU shown in FIG. 3D, header overheads of 12 bits can be reduced.

During specific implementation, when performing segmentation on the RLC SDU, the RLC entity of the first communication device may count (accumulate or decrease) an RLC SDU corresponding to each segment, and perform accumulation or decrease (+1 or -1) once each time the segmentation is performed. For each to-be-transmitted segment, if the count has reached a maximum value (which corresponds to an accumulation case) or is 0 (which corresponds to a decrease case), for example, when segmentation has been performed 15 times, in other words, 16 segments have been obtained, the segmentation is no longer performed, to ensure that the value of the first index does not exceed the threshold.

In this way, it can be ensured that the first index does not exceed the preset bits, to reduce the air interface overheads.

Optionally, if a plurality of protocol stacks are available in a system (for example, both the format of the RLC PDU shown in FIG. 3D or the format of the RLC PDU shown in FIG. 6B may be used), a network device needs to indicate a specific protocol stack (or a specific format of the RLC PDU) to be used for data transmission. For example, it is assumed that the first communication device in the embodiment shown in FIG. 6A is a terminal. Before the terminal sends a data packet based on the method shown in FIG. 6A, the network device may send indication information to the terminal, to indicate the terminal device to send data by using the format of the RLC PDU shown in FIG. 6B. Correspondingly, the network device parses, based on the format of the RLC PDU shown in FIG. 6B, the data sent by the terminal device.

In this way, it can be ensured that two devices in communication agree on the format of the RLC PDU, to ensure communication reliability.

In a possible embodiment, the RLC entity may support a non-segmentation function (in other words, the RLC PDU may not carry the SO).

FIG. 7 is a flowchart of another communication method according to an embodiment of this application. In the following description process, an example in which the method is applied to the application scenario shown in FIG. 5 is used. A procedure of the method is described as follows.

S71: An RLC entity of a first communication device obtains an RLC SDU from an upper-layer entity.

For a specific implementation of step S71, refer to the related descriptions in S61. Details are not described herein again.

S72: The RLC entity of the first communication device determines, based on configuration information, that the RLC SDU is not segmented, where the configuration information indicates that the RLC SDU is not segmented.

In this embodiment of this application, a configuration granularity of the configuration information includes but is not limited to the following several cases.

Case 1: The configuration granularity of the configuration information is determined by a data radio bearer (data radio bearer, DRB). In other words, the configuration information may indicate whether an RLC SDU corresponding to each DRB is segmented or not. For example, the configuration information may indicate that an RLC SDU corresponding to a first DRB is not segmented. Certainly, the configuration information may also indicate that an RLC SDU segment corresponding to a second DRB is segmented. Specifically, for example, if the RLC SDU obtained by the RLC entity of the first communication device from the upper-layer entity corresponds to the first DRB, it can be learned, based on the configuration information corresponding to the first DRB, that the RLC SDU is not segmented.

Case 2: The configuration granularity of the configuration information is determined by a quality of service (QoS) flow. In other words, the configuration information may indicate whether an RLC SDU corresponding to each QoS flow is segmented or not. For example, the configuration information may indicate that an RLC SDU corresponding to a first QoS flow is not segmented. Certainly, the configuration information may also indicate that an RLC SDU segment corresponding to a second QoS flow is segmented. Specifically, for example, if the RLC SDU obtained by the RLC entity of the first communication device from the upper-layer entity corresponds to the first QoS flow, it can be learned, based on the configuration information corresponding to the first QoS flow, that the RLC SDU is not segmented.

Case 3: The configuration granularity of the configuration information is determined by a PDU session. In other words, the configuration information may indicate whether an RLC SDU corresponding to each PDU session is segmented or not. For example, the configuration information may indicate that an RLC SDU corresponding to a first PDU session is not segmented. Certainly, the configuration information may also indicate that an RLC SDU segment corresponding to a second PDU session is segmented. Specifically, for example, if the RLC SDU obtained by the RLC entity of the first communication device from the upper-layer entity corresponds to the first PDU session, it can be learned, based on the configuration information corresponding to the first PDU session, that the RLC SDU is not segmented.

Case 4: The configuration granularity of the configuration information is determined by a network slice. In other words, the configuration information may indicate whether an RLC SDU corresponding to each network slice is segmented or not. For example, the configuration information may indicate that an RLC SDU corresponding to a first network slice is not segmented. Certainly, the configuration information may also indicate that an RLC SDU segment corresponding to a second network slice is segmented. Specifically, for example, if the RLC SDU obtained by the RLC entity of the first communication device from the upper-layer entity corresponds to the first network slice, it can be learned, based on the configuration information corresponding to the first network slice, that the RLC SDU is not segmented.

Case 5: The configuration granularity of the configuration information is determined by a logical channel identifier. In other words, the configuration information may indicate whether an RLC SDU corresponding to each logical channel identifier is segmented or not. For example, the configuration information may indicate that an RLC SDU corresponding to a first logical channel identifier is not segmented. Certainly, the configuration information may also indicate that an RLC SDU segment corresponding to a second logical channel identifier is segmented. Specifically, for example, if the RLC SDU obtained by the RLC entity of the first communication device from the upper-layer entity corresponds to the first logical channel identifier, it can be learned, based on the configuration information corresponding to the first logical channel identifier, that the RLC SDU is not segmented.

Case 6: The configuration granularity of the configuration information is determined by a terminal. In other words, the configuration information may indicate whether an RLC SDU corresponding to each terminal is segmented or not. For example, the configuration information may indicate that an RLC SDU corresponding to a first terminal is not segmented. Certainly, the configuration information may also indicate that an RLC SDU segment corresponding to a second terminal is segmented. Specifically, for example, if the first communication device is the first terminal, it may be learned, based on the configuration information corresponding to the first terminal, that the RLC SDU is not segmented.

Case 7: The configuration granularity of the configuration information is determined by an RLC entity. In other words, the configuration information may indicate whether an RLC SDU corresponding to each RLC entity is segmented or not. For example, the configuration information may indicate that an RLC SDU corresponding to a first RLC entity is not segmented. Certainly, the configuration information may also indicate that an RLC SDU segment corresponding to a second RLC entity is segmented. Specifically, for example, if the RLC entity in S71 is the first RLC entity, it may be learned, based on the configuration information corresponding to the first RLC entity, that the RLC SDU is not segmented.

Case 8: The configuration granularity of the configuration information is determined by a PDCP entity. In other words, the configuration information may indicate whether an RLC SDU (that is, a PDCP PDU) corresponding to each PDCP entity is segmented or not. For example, the configuration information may indicate that an RLC SDU corresponding to a first PDCP entity is not segmented. Certainly, the configuration information may also indicate that an RLC SDU segment corresponding to a second PDCP entity is segmented. Specifically, for example, if the upper-layer entity of the RLC entity in S71 is the first PDCP entity, it may be learned, based on the configuration information corresponding to the first PDCP entity, that the RLC SDU is not segmented.

It should be noted that, the foregoing cases may be separately implemented, or may be implemented simultaneously. The simultaneous implementation is as follows, for example: The RLC SDU obtained by the RLC entity of the first communication device from the upper-layer entity corresponds to the first QoS flow in the first PDU session, and the RLC entity of the first communication device determines, based on the configuration information of the first QoS flow in the first PDU session, that the RLC SDU is not segmented.

For ease of description, an example in which the configuration granularity is determined by the DRB is used below.

In this embodiment of this application, a specific form in which the configuration information indicates that the RLC SDU is not segmented includes but is not limited to the following two manners.

Manner 1: The configuration information carries first indication information, where the first indication information indicates that a service type is a preset service.

For example, a protocol specifies that or the first communication device and the second communication device agree that an RLC SDU corresponding to a URLLC service is not segmented and an RLC SDU corresponding to an eMBB service can be segmented. If the first indication information specifically indicates that a service type carried on the first DRB is the URLLC service, the RLC entity of the first communication device determines that the RLC SDU corresponding to the first DRB is not segmented. It should be understood that this is merely an example instead of a specific limitation. During actual application, the protocol further specifies that an RLC SDU corresponding to another service type is not segmented, or the first communication device and the second communication device may further agree that an RLC SDU corresponding to another service type is not segmented.

Manner 2: The configuration information carries second indication information, where the second indication information indicates that the RLC SDU is not segmented.

For example, configuration information corresponding to each DRB carries a first field, and the first field indicates whether a segmentation function for an RLC SDU corresponding to a DRB is on/off (on/off). For example, a value of 1 indicates that the segmentation function is on, and a value of 0 indicates that the segmentation function is off. If a value of a first field carried in the configuration information corresponding to the first DRB is 0, the RLC entity of the first communication device determines that the RLC SDU corresponding to the first DRB is not segmented.

Manner 3: The configuration information carries third indication information, where the third indication information indicates that an allowed maximum quantity of segments of the RLC SDU is 0 or 1. That the maximum quantity of segments is 0 may be understood as that segmentation is not performed, that is, only one RLC PDU is generated based on the RLC SDU. That the maximum quantity of segments is 1 may be understood as that only one segment is generated, and therefore, only one RLC PDU is generated based on the RLC SDU. Therefore, no matter which description is used, final effects are consistent.

An example in which the allowed maximum quantity of segments of the RLC SDU is 0 is used. For example, the configuration information corresponding to each DRB carries a second field, and a value N of the second field indicates the allowed maximum quantity of segments of the RLC SDU corresponding to the DRB, where N is 0 or a positive integer. If a value N of a second field carried in the configuration information corresponding to the first DRB is 0, the RLC entity of the first communication device determines that the RLC SDU corresponding to the first DRB is not segmented.

Certainly, during actual application, the value of N may not be 0, and correspondingly, a processing manner of the RLC entity of the first communication device also varies. For example, it is assumed that N=3, and an initial value of a counter of the RLC entity of the first communication device is 0. In this case, when receiving the RLC SDU, based on that N=3 and the counter=0, the RLC entity of the first communication device determines that segmentation is allowed, performs segmentation, and fills an RLC header for an obtained segment, to generate a first RLC PDU, where a corresponding counter is accumulated by 1, and the counter is 1. Based on that N=3 and the counter=1, the RLC entity of the first communication device determines that the segmentation is allowed, continues to perform segmentation on a remaining RLC PDU part, and fills an RLC header for an obtained segment, to generate a second RLC PDU, where a corresponding counter is accumulated by 1, and the counter=2. Based on that N=3 and the counter=2, the RLC entity of the first communication device determines that the segmentation is allowed, continues to perform segmentation on a remaining RLC PDU part, and fills an RLC header for an obtained segment, to generate a third RLC PDU, where a corresponding counter is accumulated by 1, and the counter=3. Based on that N=3 and the counter=3, the RLC entity of the first communication device determines that the segmentation is not allowed, and no longer performs segmentation and filling. It should be understood that the foregoing is merely an example, and the initial value of the counter is not limited in this application. For example, the initial value may alternatively be 1.

It should be understood that the foregoing three manners may be separately implemented, or may be implemented in combination with each other. This is not limited in this application. In addition, the foregoing three manners are merely examples rather than specific limitations. Certainly, during specific implementation, another manner may alternatively be used for indicating that the RLC SDU is not segmented.

During specific implementation, if the first communication device is a network device, the configuration information may be generated by the first communication device. In addition, the first communication device may further send the configuration information to a terminal, so that the terminal communicates with the network device based on the configuration information. If the first communication device is a terminal, the first communication device may obtain the configuration information from a network device. For example, the network device generates the configuration information and sends the configuration information, and the terminal receives the configuration information sent by the network device.

S73: The RLC entity of the first communication device generates an RLC PDU based on the RLC SDU.

Because the RLC SDU is not segmented, data of the generated RLC PDU is the complete RLC SDU. For a format of the generated RLC PDU, refer to FIG. 3A, FIG. 3B, or FIG. 3C.

S74: The RLC entity of the first communication device sends the RLC PDU, and correspondingly, an RLC entity of a second communication device receives the RLC PDU.

For a specific implementation of step S74, refer to related descriptions in S63. Details are not described herein again.

S75: The RLC entity of the second communication device determines, based on the configuration information, that the data of the RLC PDU is the complete RLC SDU.

In the foregoing solution, it may be implemented that a SO field is not carried in the RLC PDU, to reduce header overheads of the RLC PDU and reduce air interface overheads.

In a possible embodiment, a configuration of an RLC entity corresponding to a DRB may support a TM mode configuration (in other words, the RLC PDU may not carry an SN and a SO).

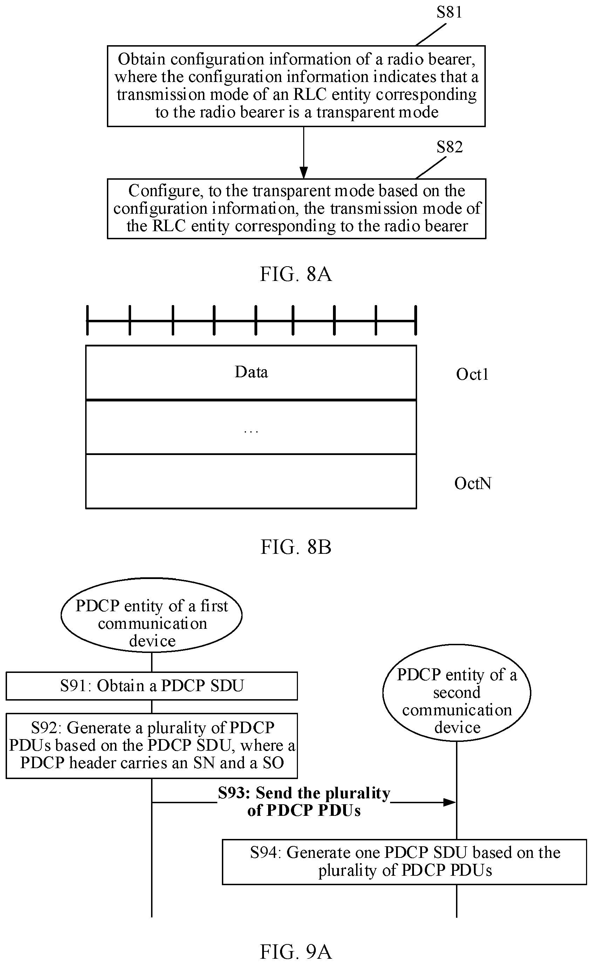

FIG. 8A is a flowchart of another communication method according to an embodiment of this application. In the following description process, an example in which the method is applied to the application scenario shown in FIG. 5 is used. A procedure of the method is described as follows.

S81: A first communication device obtains configuration information of a radio bearer, where the configuration information indicates that a transmission mode of an RLC entity corresponding to the radio bearer is a TM.

The first communication device may be any device, for example, a base station or a terminal in the scenario shown in FIG. 5. This is not limited in this application.

The radio bearer is a channel used for bearing data transmission at a layer such as an/a SDAP/PDCP/RLC/MAC/PHY layer (where the PHY layer is optional). The radio bearer may be divided into a plurality of types based on different content that is borne. For example, the plurality of types include but not limited to: (1) a DRB, where content of the radio bearer is data; (2) a signaling radio bearer (radio bearer, SRB), where content that is borne is signaling; and (3) a computing radio bearer (computing radio bearer, CRB), where the content that is borne is a computing resource, for example, a processing capability of a CPU.

The following uses the DRB as an example.

According to a current NR protocol, a configuration of an RLC entity corresponding to the DRB supports only an AM (which is referred to as an RLC AM mode for short) or an UM (which is referred to as an RLC AM mode for short). The configuration content is as follows:

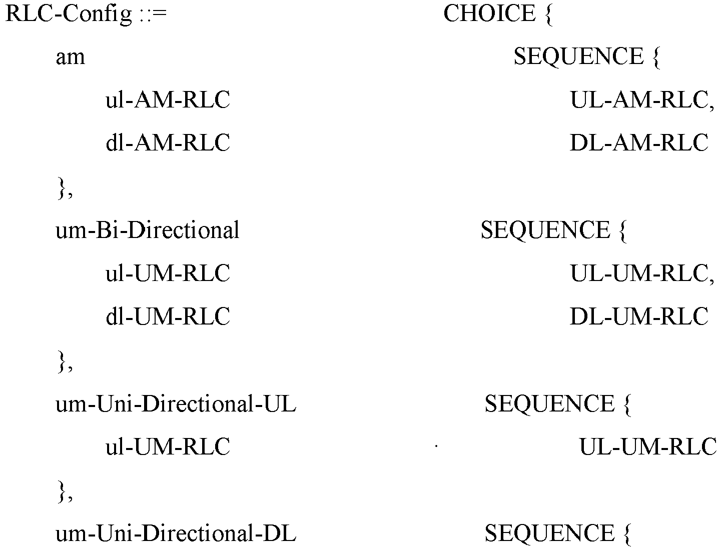

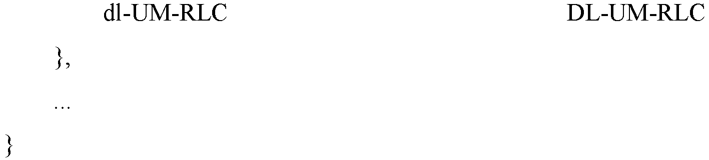

However, in this embodiment of this application, in addition to supporting the AM (which is referred to as the RLC AM for short) or the UM (which is referred to as the RLC AM mode for short), the configuration of the RLC entity corresponding to the DRB may further support a TM (which is referred to as an RLC TM mode for short). Configuration content is as follows:

For example, configuration information of the DRB is as follows:

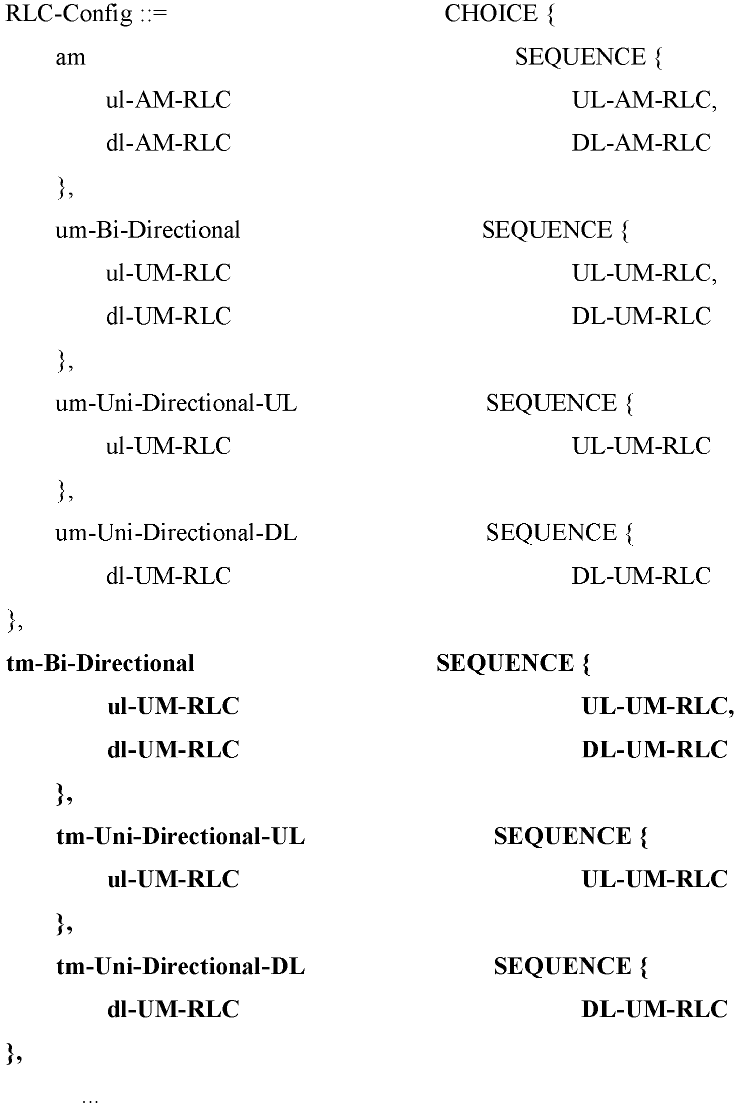

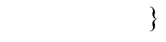

The foregoing part in bold indicates a configuration corresponding to the RLC TM mode.

In this embodiment of this application, the configuration information may be generated by a network device and sent to another device (for example, another network device or a terminal). For example, if the first communication device is a terminal, and the second communication device is a base station, the second communication device generates the configuration information and sends the configuration information to the first communication device. Correspondingly, that the first communication device obtains the configuration information of the radio bearer is specifically as follows. The first communication device receives the configuration information from the second communication device. Alternatively, for example, if the first communication device is a base station, and the second communication device is a terminal, the first communication device generates the configuration information and sends the configuration information to the second communication device. Correspondingly, that the first communication device obtains the configuration information of the radio bearer is specifically as follows. The first communication device generates the configuration information. During specific implementation, the network device may carry the configuration information in signaling at an RRC layer, or may carry the configuration information in signaling at a PDCP layer or signaling at a MAC layer. This is not limited in this application.

S82: The first communication device sets, to the TM based on the configuration information, the transmission mode of the RLC entity corresponding to the radio bearer.

It can be learned from the foregoing description that the TM means that a sending entity does not add any extra control protocol overheads to higher-layer data. Therefore, after obtaining the RLC SDU from an upper-side entity, the RLC entity of the first communication device directly uses, without adding any control information, the entire RLC SDU as an RLC PDU or uses each segment of the RLC SDU as an RLC PDU, and the generated RLC PDU includes only data, as shown in FIG. 8B.

Based on the foregoing solution, not only can the RLC TM be used by a common channel such as a paging (paging) channel/system information block (system information block, SIB), but also one DRB, SRB, or CRB may be separately configured to support the RLC TM mode, to effectively reduce header overheads of the RLC PDU and reduce air interface overheads.

In a possible embodiment, functions of an RLC layer may be combined into another layer, to save all RLC header overheads of the RLC layer.

FIG. 9A is a flowchart of another communication method according to an embodiment of this application. In the following description process, an example in which the method is applied to the application scenario shown in FIG. 5 is used. A procedure of the method is described as follows.

S91: A PDCP entity of a first communication device obtains a PDCP SDU.

The first communication device may be any device, for example, a base station or a terminal in the scenario shown in FIG. 5. This is not limited in this application.

The PDCP entity of the first communication device obtains the PDCP SDU from an upper-layer entity. For example, the PDCP entity receives a SDAP PDU delivered by a SDAP entity, and uses the SDAP PDU as the PDCP SDU.

S92: The PDCP entity of the first communication device generates a plurality of PDCP PDUs based on the PDCP SDU.

Specifically, when processing the PDCP SDU, the PDCP entity may segment the PDCP SDU to generate a plurality of PDCP SDU segments, and then add a PDCP header to each segment, to finally form the plurality of PDCP PDUs. Each PDCP PDU includes a header and data. The data is a segment in the PDCP SDU. The header includes a sequence number. The sequence number identifies the PDCP SDU (that is, a PDCP SN, where for the definition, reference may be made to the foregoing related description). The header further includes a SO, and the SO indicates a byte offset of a first byte of the segment in the PDCP SDU.

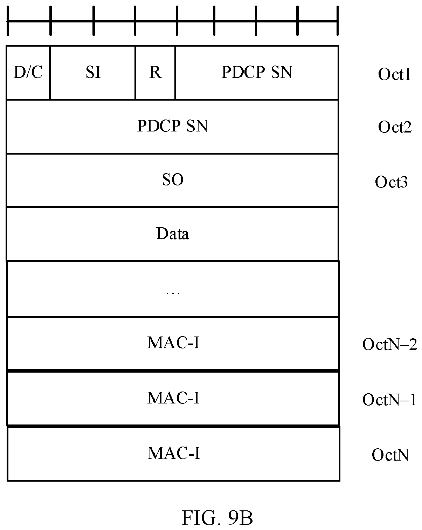

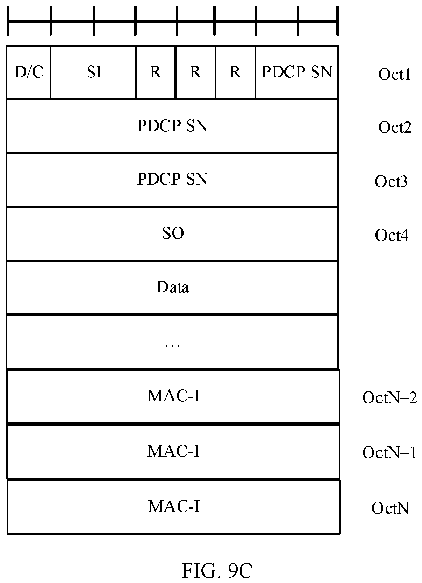

For example, FIG. 9B and FIG. 9C are schematic diagrams of two possible formats of a PDCP data PDU. A difference between FIG. 9B and FIG. 9C and FIG. 4A and FIG. 4B is that a SI field and a SO field are added to the PDCP header. For a meaning of the SO field, refer to the descriptions in the foregoing related embodiments of FIG. 4A and FIG. 4B. Details are not described herein again. The SI field herein further indicates a type (segmentation type) of the PDCP data PDU (that is, an RLC data PDU), and different values of SI correspond to different types of the PDCP data PDU.

For example, for the different values of the SI, corresponding meanings may be as follows. 00: Data of the PDCP PDU includes all bytes of the PDCP SDU. 01: Data of the PDCP PDU includes a first segment of the PDCP SDU. 10: Data of the PDCP PDU includes a last segment of the PDCP SDU. 11: Data of the PDCP PDU neither includes a first segment of the PDCP SDU nor includes a last segment of the PDCP SDU. It should be understood that this is merely an example. During actual implementation, a correspondence between a value of the SI and the type of the PDCP PDU may alternatively be implemented in another manner.

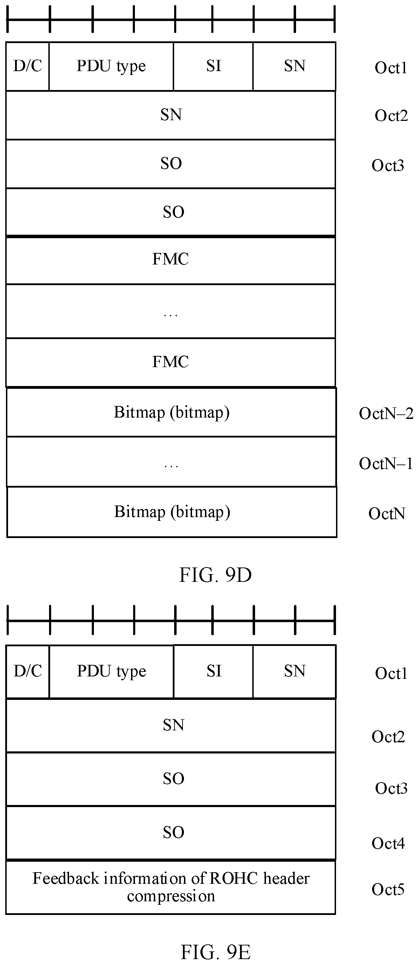

For example, FIG. 9D to FIG. 9F are schematic diagrams of three possible formats of a PDCP control PDU. The "PDU type" indicates a type of the PDCP control PDU. For example, FIG. 9D to FIG. 9F separately list PDCP control PDUs of three different PDU types.

The PDCP control PDU shown in FIG. 9D is used for transmitting a user PDCP status report (status report, SR). For example, a PDCP SR corresponding to uplink data transmission is sent by a gNB to UE, and a PDCP SR corresponding to downlink data transmission is sent by the UE to the gNB. FMC is a number of a first data packet that is unsuccessfully transmitted. A bitmap (bitmap) indicates whether a data packet after the first data packet that is unsuccessfully transmitted is successfully transmitted. For example, 1 indicates that the data packet is successfully transmitted, and 0 indicates that the data packet is unsuccessfully transmitted.

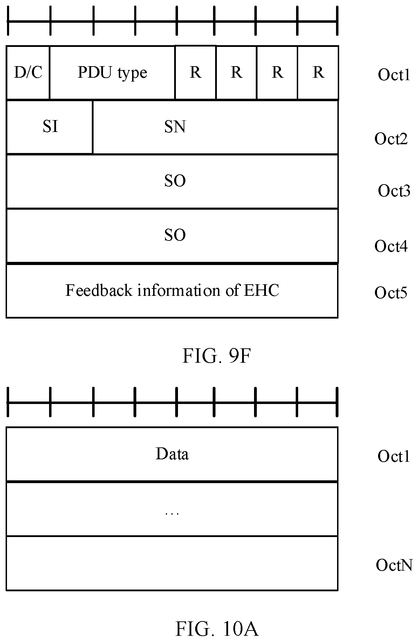

The PDCP control PDU shown in FIG. 9E is used for transmitting feedback information of robust header compression (Robust header compression, ROHC). The PDCP control PDU shown in FIG. 9F is used for transmitting feedback information of ethernet header compression (ethernet header compression, EHC).

Similarly, the SI fields in FIG. 9D to FIG. 9F each further indicate the type (segmentation type) of the PDCP control PDU (that is, an RLC control PDU). For a specific definition, refer to related descriptions in FIG. 9A and FIG. 9B. Details are not described herein again.

It should be understood that positions and lengths that are of fields such as SI, an SN, and a SO in FIG. 9B to FIG. 9F are merely examples but not limitations.

In addition, SNs in the PDCP control PDU and SNs in the PDCP data PDU may be consecutively numbered, or may not be consecutively numbered. This is not limited in this application.

S93: The PDCP entity of the first communication device sends the plurality of PDCP PDUs. Correspondingly, a PDCP entity of the second communication device receives the plurality of PDCP PDUs.

If the PDCP entity of the first communication device performs segmentation on the PDCP SDU, the PDCP entity of the first communication device sequentially sends the plurality of PDCP PDUs corresponding to the PDCP SDU. Correspondingly, the PDCP entity of the second communication device sequentially receives the plurality of PDCP PDUs corresponding to the PDCP SDU. It should be understood that actual transmission further includes processing by a lower-layer entity (such as a MAC entity or a PHY entity). For details, refer to the foregoing related descriptions. Details are not described herein again.

S94: The PDCP entity of the second communication device generates one PDCP SDU based on the plurality of PDCP PDUs.

Specifically, the PDCP entity of the second communication device determines, based on that SNs in the plurality of PDCP PDUs are the same, that the plurality of PDCP PDUs correspond to the same PDCP SDU, and then combines in order the plurality of PDCP PDUs into one complete PDCP SDU based on a SO of each PDCP PDU in the plurality of PDCP PDUs.

It should be understood that actually, an RLC layer also supports a function of not segmenting the RLC SDU. Therefore, the function of not segmenting the RLC SDU supported by the RLC layer may also be combined into a PDCP layer. Details are not described herein again.

Optionally, in this embodiment of this application, after obtaining the PDCP PDU, the PDCP entity of the first communication device may directly deliver the PDCP PDU to a MAC layer. Correspondingly, the PDCP entity of the second communication device may directly obtain the PDCP PDU from a MAC entity. Certainly, during actual application, the PDCP entity of the first communication device may first deliver the PDCP PDU to an RLC entity, and the RLC entity may directly transfer the PDCP PDU to a MAC entity without performing any processing. The MAC entity of the second communication device may alternatively transfer a MAC SDU to an RLC entity, and the RLC entity may directly transfer the MAC SDU (that is, the PDCP PDU) to the PDCP entity without performing any processing.

It should be understood that the foregoing uses an example in which functions of the RLC layer are combined into the PDCP layer. During actual application, the functions of the RLC layer may alternatively be combined into another layer (for example, an RRC layer or a MAC layer). This is not limited in this application.

Based on the foregoing solution, in one aspect, because all header overheads of the RLC layer are saved, air interface overheads can be reduced. In another aspect, because processing of the RLC layer is omitted, processing latency of the first communication device and a processing end can be further reduced.

In a possible embodiment, the PDCP entity may support the TM, to save all PDCP header overheads of the PDCP layer.

As described above in FIG. 4A and FIG. 4B, in addition to carrying upper-layer application data, the PDCP data PDU further carries the following PDCP header overheads: 6 bytes and 7 bytes (if an integrity protection function is on), or 2 bytes and 3 bytes (if the integrity protection function is off).

In this embodiment, that the PDCP header overheads are reduced in the PDCP data PDU is mainly discussed, which is specifically divided into the following two cases. (1) D/C and PDCP SN: If the PDCP data PDU does not carry the PDCP SN, it means that a PDCP encryption function is always not supported (because current PDCP encryption depends on that the PDCP SN serves as an input). If the PDCP data PDU does not carry the D/C, it means that a related PDCP control PDU cannot be transmitted in a same PDCP entity (because in a conventional technology, a D/C field indicates that the type of the PDCP PDU is the PDCP data PDU or the PDCP Control PDU). (2) MAC-I: If the PDCP data PDU does not carry the MAC-I, it means that the integrity protection function is always not supported. When both the foregoing two cases are true, a new format of the PDCP PDU is designed in embodiments of this application to support the TM of the PDCP entity (which is referred to as a PDCP TM for short). The specific format is shown in FIG. 10A, and the PDCP entity does not add any extra control protocol overheads to higher-layer data. Similar to that in the embodiment 3, in this embodiment, a DRB configuration may support the PDCP TM, and details are not described herein again.

When a specific PDCP entity supports the TM to transmit the PDCP data PDU, the PDCP PDU transmitted by the PDCP entity cannot carry a D/C field. If the PDCP data PDU and the PDCP control PDU that are originally transmitted by the PDCP entity are transmitted in the PDCP entity at the same time, the PDCP data PDU and the PDCP control PDU cannot be distinguished. Therefore, the PDCP data PDU and the PDCP control PDU that are originally transmitted by the PDCP entity cannot be transmitted in the PDCP entity at the same time.

In view of this, the following method provided in this embodiment may implement separate transmission of the PDCP data PDU and the PDCP control PDU, so that the PDCP data PDU and the PDCP control PDU can be distinguished and header overheads of the PDCP data PDU are reduced.

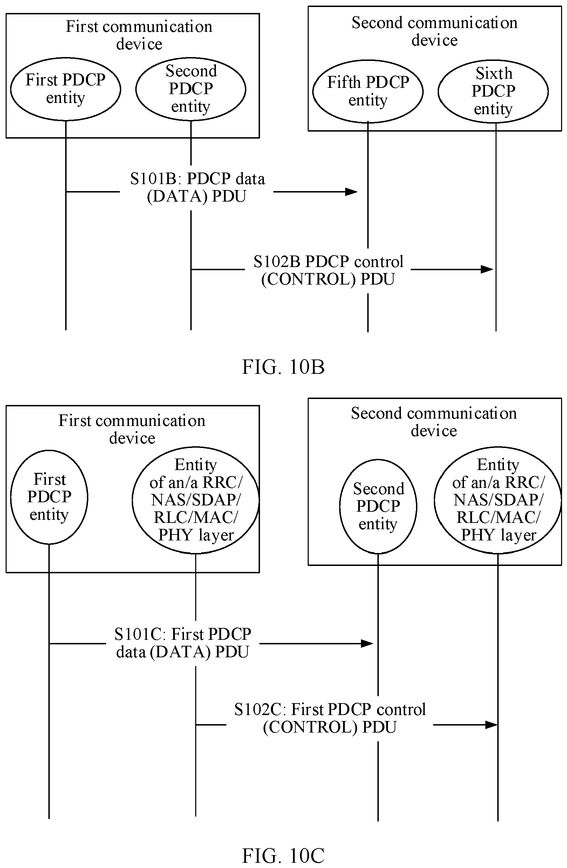

FIG. 10B is a flowchart of another communication method according to an embodiment of this application. In the following description process, an example in which the method is applied to the application scenario shown in FIG. 5 is used. A procedure of the method is described as follows.

S101B: A first PDCP entity of a first communication device sends a PDCP data PDU. Correspondingly, a fifth PDCP entity of a second communication device receives the PDCP data PDU sent by the first PDCP entity of the first communication device.

The first communication device may be any device, for example, a base station or a terminal in the scenario shown in FIG. 5. This is not limited in this application. The second communication device is another device, for example, a terminal or a base station that can communicate with the first communication device. This is not limited in this application.

S102B: A second PDCP entity of the first communication device sends a PDCP control PDU, and correspondingly, a sixth PDCP entity of the second communication device receives the PDCP control PDU sent by the second PDCP entity of the first communication device.

The PDCP data PDU sent by the first PDCP entity is associated with the PDCP control PDU sent by the second PDCP entity, and the first PDCP entity is different from the second PDCP entity. Correspondingly, the PDCP data PDU received by the fifth PDCP entity is associated with the PDCP control PDU received by the sixth PDCP entity, and the fifth PDCP entity is different from the sixth PDCP entity.

In this embodiment of this application, on a first communication device side, the first PDCP entity is configured to send the PDCP data PDU, but is not configured to send the PDCP control PDU. The second PDCP entity is configured to send the PDCP control PDU, but is not configured to send the PDCP data PDU. Correspondingly, on a second communication device side, the fifth PDCP entity is configured to receive the PDCP data PDU, but is not configured to receive the PDCP control PDU. The sixth PDCP entity is configured to receive the PDCP control PDU, but is not configured to receive the PDCP data PDU.

Because implementation on the first communication device side corresponds to implementation on the second communication device side, the following mainly describes in detail the implementation on the first communication device side. For specific implementation on the second communication device side, refer to specific implementation on the first communication device side.

That the PDCP data PDU sent by the first PDCP entity is associated with the PDCP control PDU sent by the second PDCP entity means: The PDCP control PDU sent by the second PDCP entity is used for controlling transmission of the PDCP data PDU sent by the first PDCP entity. In other words, the PDCP data PDU sent by the first PDCP entity and the PDCP control PDU sent by the second PDCP entity should be originally transmitted in a same PDCP entity, but the PDCP data PDU and the PDCP control PDU are separated to two different PDCP entities for transmission.

It should be understood that, that the PDCP control PDU sent by the first PDCP entity is associated with the PDCP data PDU sent by the second PDCP entity may alternatively be described as that the first PDCP entity is associated with the second PDCP entity. In addition, for ease of description, a PDCP entity configured to transmit the PDCP data PDU may be referred to as a data (data) PDCP entity below, and a PDCP entity configured to transmit the PDCP control PDU may be referred to as a control (control) PDCP entity below.

Optionally, the first communication device may obtain configuration information. The configuration information may indicate a PDCP entity whose PDCP data PDU has a transmission entity separated from a transmission entity of a PDCP control PDU. Further, the configuration information may further indicate which PDCP entity is the data PDCP entity (which is configured to send the PDCP data PDU), which PDCP entity is the control PDCP entity (which is configured to send the PDCP control PDU), and an association relationship between the data PDCP entity and the control PDCP entity. Correspondingly, the first communication device may determine, based on the configuration information, the PDCP entity whose PDCP data PDU has the transmission entity separated from the transmission entity of the PDCP control PDU, which PDCP entity is the data PDCP entity, which PDCP entity is the control PDCP entity, the association relationship between the data PDCP entity and the control PDCP entity, and the like.

A specific manner in which the first communication device obtains the configuration information is described as follows. For example, if the first communication device is a network device, and the second communication device is a terminal, the first communication device may generate the configuration information, and may further send the configuration information to the second communication device. Alternatively, for example, if the first communication device is a terminal, and the second communication device is a network device, the second communication device may generate the configuration information, and the first communication device receives the configuration information from the second communication device.

Optionally, a configuration granularity of the configuration information may be determined by the PDCP entity, in other words, one PDCP entity separately corresponds to one piece of configuration information.

For example, the first communication device is the terminal, and the first communication device receives the configuration information from the network device. The configuration information may include the following.
(1) For first configuration information of the first PDCP entity, the first configuration information may specifically carry the following.
   A. First indication information, where the first indication information indicates that a transmission entity of a PDCP data PDU of the first PDCP entity is separated from a transmission entity of a PDCP control PDU, or a transmission mode of the first PDCP entity is a TM.
      The first configuration information may explicitly indicate that the transmission entity of the PDCP data PDU of the first PDCP entity is separated from the transmission entity of the PDCP control PDU, to be specific, the first configuration information directly indicates that the transmission entity of the PDCP data PDU of the first PDCP entity is separated from the transmission entity of the PDCP control PDU.
      The first configuration information may alternatively implicitly indicate that the transmission entity of the PDCP data PDU is separated from the transmission entity of the PDCP control PDU. For example, if the first configuration information indicates that the transmission mode of the first PDCP entity is the TM, the first PDCP entity may determine, based on the TM, that the first PDCP entity is only configured to transmit the PDCP data PDU. Therefore, the first PDCP entity may further determine that the transmission entity of the PDCP data PDU of the first PDCP entity is separated from the transmission entity of the PDCP control PDU.
   B. Second indication information, indicating that the first PDCP entity is configured to transmit the PDCP data PDU.
   C. Fourth indication information, indicating that the PDCP data PDU transmitted by the first PDCP entity is associated with the PDCP control PDU transmitted by the second PDCP entity.
(2) For second configuration information of the second PDCP entity, the second configuration information may specifically carry the following.
   A. Third indication information, indicating that the second PDCP entity is configured to transmit the PDCP control PDU.
   B. Fifth indication information, indicating that a transmission entity of a PDCP data PDU of the second PDCP entity is separated from a transmission entity of a PDCP control PDU.
   C. Sixth indication information, where the PDCP control PDU transmitted by the second PDCP entity is associated with the PDCP data PDU transmitted by the first PDCP entity.

It should be understood that, during actual application, the configuration information may carry only some but not all of the foregoing six types of information. For example, when the first configuration information already carries the first indication information, the second indication information, and the fourth indication information, the second configuration information may not need to carry the fifth indication information and the sixth indication information. On the contrary, when the second configuration information already carries the third indication information, the fifth indication information, and the sixth indication information, the second configuration information may not need to carry the first indication information and the fourth indication information. In this way, configuration overheads can be reduced.

It should be understood that, in physical implementation, the foregoing various types of indication information may be a plurality of information elements (information elements, IEs), or may be a same information element. This is not limited in this application. For example, the configuration information includes a plurality of information elements, each information element corresponds to only one type of indication information described above, and different information elements correspond different types of indication information. Alternatively, for example, the configuration information includes one or more information elements, and a first information element may correspond to at least two types of indication information described above.

It should be noted that, the foregoing uses two PDCP entities (that is, the first PDCP entity and the second PDCP entity) as an example. However, actually, the first communication device may have more PDCP entities.

When a quantity of PDCP entities in the first communication device is more than two, an association relationship between the data PDCP entity and the control PDCP entity may be a one-to-one association relationship (to be specific, one data PDCP entity is associated with one control PDCP entity, and different data PDCP entities are associated with different control PDCP entities). Specifically, examples are as follows. The first PDCP entity of the first communication device sends a first PDCP data PDU. The second PDCP entity of the first communication device sends a first PDCP control PDU. A third PDCP entity of the first communication device sends a second PDCP data PDU. A fourth PDCP entity of the first communication device sends a second PDCP control PDU. The first PDCP control PDU is associated with the first PDCP data PDU, the second PDCP control PDU is associated with the second PDCP data PDU, and any two of the third PDCP entity, the fourth PDCP entity, the first PDCP entity, and the second PDCP entity are different.

Alternatively, the association relationship between the data PDCP entity and the control PDCP entity may be a many-to-one association relationship (to be specific, a plurality of data PDCP entities are associated with a same control PDCP entity). Specifically, examples are as follows. The first PDCP entity of the first communication device sends a first PDCP data PDU. The second PDCP entity of the first communication device sends a first PDCP control PDU. A third PDCP entity of the first communication device sends a second PDCP data PDU. The second PDCP entity of the first communication device sends a second PDCP control PDU. The first PDCP control PDU is associated with the first PDCP data PDU, the second PDCP control PDU is associated with the second PDCP data PDU, and any two of the third PDCP entity, the first PDCP entity, and the second PDCP entity are different.

When the quantity of PDCP entities in the first communication device is more than two, for configuration information of each PDCP entity, reference may be made to the configuration information of the first PDCP entity or the second PDCP entity. Details are not described herein again.

Further, when the association relationship between the data PDCP entity and the control PDCP entity is the many-to-one association relationship, the network device may further configure the control PDCP entity to carry, in the PDCP control PDU, an identifier of the data PDCP entity corresponding to the PDCP control PDU and/or an identifier of the PDCP data PDU corresponding to the PDCP control PDU, so that a receive end distinguishes between different PDCP control PDUs in the same control PDCP entity.

The foregoing descriptions of "the first PDCP entity of the first communication device sends the first PDCP data PDU; the second PDCP entity of the first communication device sends the first PDCP control PDU; the third PDCP entity of the first communication device sends the second PDCP data PDU; and the second PDCP entity of the first communication device sends the second PDCP control PDU" are still used. In this case, the first PDCP control PDU may carry an identifier of the first PDCP entity or an identifier of the first PDCP data PDU, and the second PDCP control PDU may carry an identifier of the third PDCP entity or an identifier of the second PDCP data PDU. Correspondingly, after receiving the first PDCP data PDU, the first PDCP control PDU, the second PDCP data PDU, and the second PDCP control PDU, the second communication device may determine, based on the identifier of the first PDCP entity or the identifier of the first PDCP data PDU carried in the first PDCP control PDU, that the first PDCP control PDU is associated with the first PDCP data PDU, and determine, based on the identifier of the third PDCP entity or the identifier of the second PDCP data PDU carried in the second PDCP control PDU, that the second PDCP control PDU is associated with the second PDCP data PDU.

Based on the foregoing solution, the PDCP data PDU and the PDCP control PDU are decoupled from each other, and are sent using different PDCP entities. In this way, the PDCP entity can send the PDCP data PDU in a TM mode, to reduce header overheads of the PDCP data PDU and reduce air interface overheads.

FIG. 10C is a flowchart of another communication method according to an embodiment of this application. In the following description process, an example in which the method is applied to the application scenario shown in FIG. 5 is used. A procedure of the method is described as follows.

S101C: A first PDCP entity of a first communication device sends a first PDCP data PDU, and correspondingly, a second PDCP entity of a second communication device receives the first PDCP data PDU sent by the first PDCP entity of the first communication device.

S102C: An entity at an/a RRC/NAS/SDAP/RLC/MAC/PHY layer of the first communication device sends a first PDCP control PDU, and correspondingly, an entity of a non-PDCP layer (for example, an/a RRC/NAS/SDAP/RLC/MAC/PHY layer) of the second communication device receives the first PDCP control PDU sent by an entity of a non-PDCP layer (for example, an/a RRC/NAS/SDAP/RLC/MAC/PHY layer) of the first communication device.

The first PDCP control PDU is associated with the first PDCP data PDU. For a meaning of association between the first PDCP control PDU with the first PDCP data PDU herein, refer to the foregoing related descriptions. Details are not described herein again.

Similarly, when an entity at a same RRC/NAS/SDAP/RLC/MAC/PHY layer sends PDCP control PDUs corresponding to a plurality of PDCP entities, an identifier of a corresponding PDCP entity and/or an identifier of a corresponding PDCP data PDU need/needs to be carried in the PDCP control PDU, to distinguish between different PDCP control PDUs in the entity at the same RRC/NAS/SDAP/RLC/MAC/PHY layer.

Based on the foregoing solution, the PDCP data PDU and the PDCP control PDU are decoupled from each other, and the PDCP control PDU is sent using an entity at another layer. In this way, a PDCP entity can send the PDCP data PDU in a TM mode, to reduce header overheads of the PDCP data PDU and reduce air interface overheads.

In a possible embodiment, the PDCP entity and an RLC entity may both support the TM, to save all header overheads of a PDCP layer and an RLC layer.

When both the PDCP entity and the RLC entity support the TM, neither the PDCP data PDU nor an RLC data PDU carries an SN or a SO. As a result, some functions of the PDCP layer and the RLC layer are missing. For example, the functions include but not limited to the following. (1) PDCP encryption and decryption: Both encryption and decryption depend on that a PDCP SN (that is, an SN in a PDCP header) serves as an input. If there is no PDCP SN, the PDCP SN cannot be completed. (2) PDCP reordering and in-order delivery (reordering and in-order delivery): A PDCP entity at a receive end needs to perform reordering based on the PDCP SN and perform in-order delivery to an upper-layer entity. If there is no PDCP SN, the reordering and the in-order delivery cannot be completed. (3) PDCP duplicate discarding (duplicate discarding): Because the PDCP entity at the receive end needs to determine, based on the PDCP SN carried in the PDCP header, whether different PDCP PDUs are a plurality of duplicate packets of a same data packet, a duplicate packet cannot be accurately discarded. If there is no PDCP SN, the duplicate discarding cannot be completed. (4) RLC SDU segmentation: Because the RLC entity at the receive end needs to correctly combine segments based on an RLC SN (that is, an SN in an RLC header) and a SO. If there is no RLC SN, combination cannot be correctly performed. It should be understood that the foregoing four types are merely examples but not limitations. Actually, more functions may depend on the SN and the SO.

In view of this, the following method provided in this embodiment may implement that both the PDCP entity and the RLC entity support the TM, and the receive end can obtain SNs corresponding to the PDCP data PDU and the RLC data PDU.

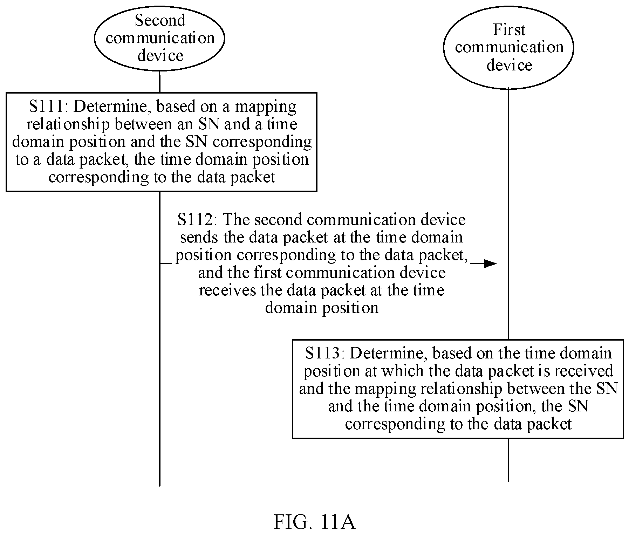

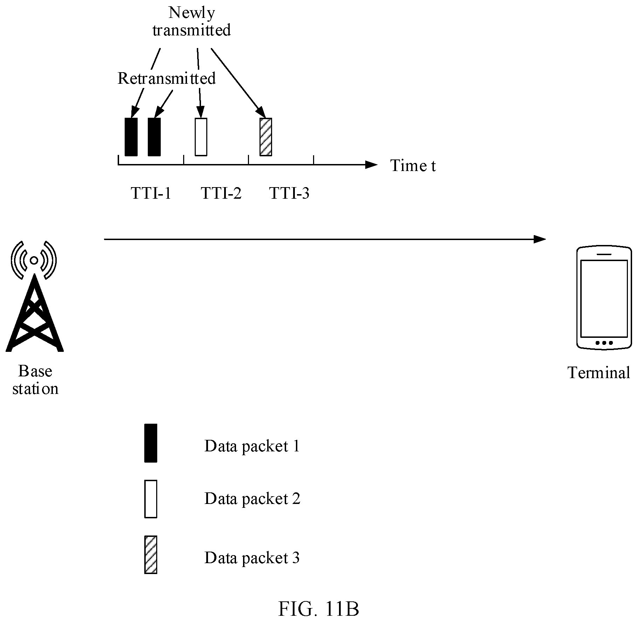

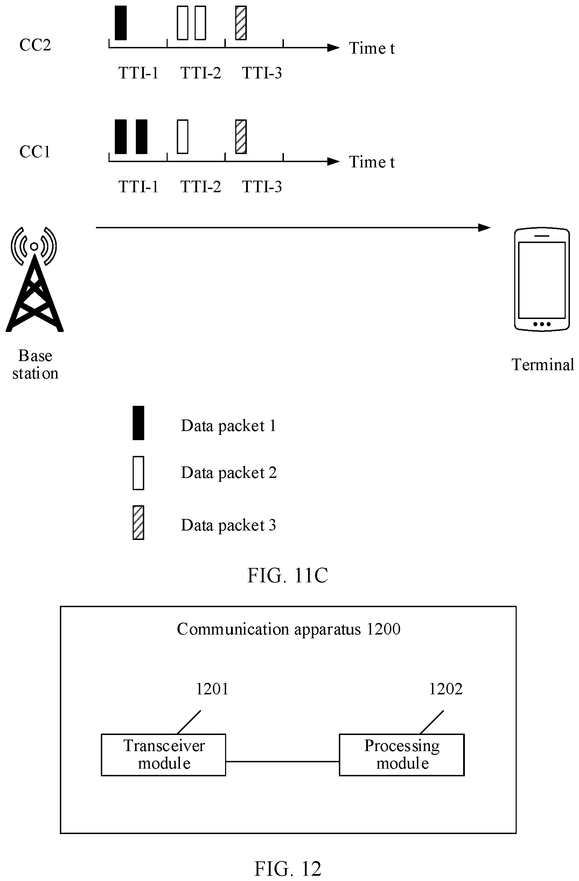

FIG. 11Ais a flowchart of another communication method according to an embodiment of this application. In the following description process, an example in which the method is applied to the application scenario shown in FIG. 5 is used. A procedure of the method is described as follows.

S111: A second communication device determines, based on a mapping relationship between an SN and a time domain position (or a time domain range) and the SN corresponding to a data packet, the time domain position corresponding to the data packet. Transmission modes of a PDCP entity and an RLC entity that are of the second communication device each are a TM.

The second communication device may be any device, for example, a base station or a terminal in the scenario shown in FIG. 5. This is not limited in this application. The data packet may be a data packet delivered by an upper-layer entity of a PDCP layer of the second communication device, for example, a data packet delivered by a SDAP layer, that is, a PDCP SDU.

In this embodiment of this application, an operation of determining, based on the mapping relationship between the SN and the time domain position and the SN corresponding to the data packet, the time domain position corresponding to the data packet may be performed by an entity corresponding to any protocol layer of the second communication device. For example, the PDCP entity of the second communication device transfers, to a MAC entity of the second communication device, the SN corresponding to the data packet, so that the MAC entity of the second communication device determines, based on the mapping relationship between the SN and the time domain position and the SN corresponding to the data packet, the time domain position corresponding to the data packet. Alternatively, for example, the PDCP entity of the second communication device determines, based on the mapping relationship between the SN and the time domain position and the SN corresponding to the data packet, the time domain position corresponding to the data packet, so that the PDCP entity of the second communication device transfers, to the MAC entity of the second communication device, the time domain position corresponding to the data packet. It should be understood that the foregoing two manners are merely examples rather than limitations. During actual application, the operation may alternatively be performed by another layer (for example, an RLC layer). This is not specifically limited in this application.

S112: The second communication device sends the data packet at the time domain position corresponding to the data packet; and correspondingly, a first communication device receives the data packet at the time domain position. Transmission modes of a PDCP entity and an RLC entity that are of the first communication device each are a TM.

Certainly, actual transmission further includes a processing process of another layer (such as a MAC layer or a PHY layer). For a processing process of the another layer, refer to the foregoing related descriptions. Details are not described herein again.

It should be noted that, if the second communication device detects that a current time point has exceeded the time domain position corresponding to the data packet but the data packet has not been sent, or the second communication device detects that the current time point has exceeded the time domain position corresponding to the data packet but the data packet has not been successfully sent, the second communication device may discard the data packet, in other words, no longer send the data packet, to avoid confusion caused to the first communication device because the data packet falls at a time domain position corresponding to another data packet.

S113: The first communication device determines, based on the time domain position at which the data packet is received and the mapping relationship between the SN and the time domain position, the SN corresponding to the data packet.

The first communication device may be any device, for example, a base station or a terminal that can communicate with the second communication device. This is not limited in this application.

In this embodiment of this application, the operation of determining, based on the time domain position at which the data packet is received and the mapping relationship between the SN and the time domain position, the SN corresponding to the data packet may be performed by an entity corresponding to any protocol layer of the first communication device. For example, a MAC entity of the first communication device transfers the time domain position of the data packet to the PDCP entity of the first communication device, so that the PDCP entity of the first communication device determines, based on the time domain position at which the MAC entity receives the data packet and the mapping relationship between the SN and the time domain position, the SN corresponding to the data packet. For example, the MAC entity of the first communication device determines, based on the time domain position at which the data packet is received and the mapping relationship between the SN and the time domain position, the SN corresponding to the data packet, so that the MAC entity of the first communication device transfers, to the PDCP entity of the first communication device, the SN corresponding to the data packet. It should be understood that the foregoing two manners are merely examples rather than limitations. During actual application, the operation may alternatively be performed by another layer (for example, an RLC layer). This is not specifically limited in this application.

After determining, based on the time domain position at which the data packet is received and the mapping relationship between the SN and the time domain position, the SN corresponding to the data packet, the first communication device may use the SN as a PDCP SN to perform another PDCP operation, for example, PDCP decryption or PDCP reordering.

Optionally, a network device may configure the mapping relationship between the sequence number and the time domain position. For example, if the second communication device is a network device, and the first communication device is a terminal, the second communication device configures the mapping relationship between the sequence number and the time domain position, and sends the mapping relationship between the sequence number and the time domain position to the first communication device, so that the second communication device sends a data packet based on the mapping relationship, and the first communication device receives the data packet based on the mapping relationship. Alternatively, for example, if the second communication device is a terminal, and the first communication device is a network device, the first communication device configures the mapping relationship between the sequence number and the time domain position, and sends the mapping relationship between the sequence number and the time domain position to the second communication device, so that the second communication device sends a data packet based on the mapping relationship, and the first communication device receives the data packet based on the mapping relationship.

Optionally, a configuration granularity of the time domain position may be determined by at least one of the following: a system frame number (system frame number, SFN), a subframe number (subframe number), a slot number (slot number), a symbol number (symbol number), or the like.

For ease of description, a time domain position or a time domain range corresponding to a data packet may be described as a transmission time interval (transmission time interval, TTI). For example, refer to FIG. 11B. A base station sends a data packet 1, a data packet 2, and a data packet 3 in a TTI-1, a TTI-2, and a TTI-3 respectively. Correspondingly, a terminal receives the data packet 1, the data packet 2, and the data packet 3 in the TTI-1, the TTI-2, and the TTI-3 respectively. It should be noted that, if a data packet needs to be retransmitted, an occasion for retransmitting the data packet is also in a TTI range corresponding to the data packet. FIG. 11B shows an example of a single-carrier scenario. This application is also applicable to a dual-carrier or multi-carrier scenario. For example, as shown in FIG. 11C, a base station sends a data packet 1 on a component carrier (component carrier, CC) 1 and a CC2 in a TTI-1. The base station sends a data packet 2 on the CC1 and the CC2 in a TTI-2. The base station sends a data packet 3 on the CC1 and the CC2 in a TTI-3.

It should be understood that, the foregoing uses an example in which there is the mapping relationship between the SN and the time domain position. During specific implementation, if there are segments in a data packet, a SO may also be mapped to a time domain position, and the first communication device determines, based on a mapping relationship between the SO and the time domain position and a time point at which the segment is received, a SO corresponding to each segment.

Based on the foregoing solution, it can be implemented that both the PDCP entity and the RLC entity support the TM, and the first communication device can obtain SNs corresponding to a PDCP data PDU and an RLC data PDU, so that data transmission reliability is ensured and air interface overheads are reduced.

It may be understood that the foregoing embodiments provided in this application may be separately implemented, or may be implemented in combination with each other. A case of implementation in combination is as follows, for example: The solution shown in FIG. 6A may be combined with the solution shown in FIG. 9A for implementation, to be specific, a SO of a PDCP layer may be replaced with an index. In this way, air interface overheads can be further reduced. For example, the solutions shown in FIG. 8A, FIG. 10B, and FIG. 11A may be implemented in combination, so that both a PDCP layer and an RLC layer can support a TM mode (where no SN is carried), and it is ensured that a receive end can obtain an SN corresponding to a data packet. Certainly, the foregoing is merely an example of some combination manners. During actual application, there may be more combination manners, and details are not described herein again.

It may be understood that, to implement functions in the foregoing embodiments, each communication apparatus includes a corresponding hardware structure and/or software module for performing each function. A person skilled in the art should be easily aware that, with reference to the units and the method steps in the examples described in embodiments disclosed in this application, this application can be implemented using hardware or a combination of hardware and computer software. Whether a function is performed using the hardware or the hardware driven by the computer software depends on particular application scenarios and design constraints that are of the technical solutions.

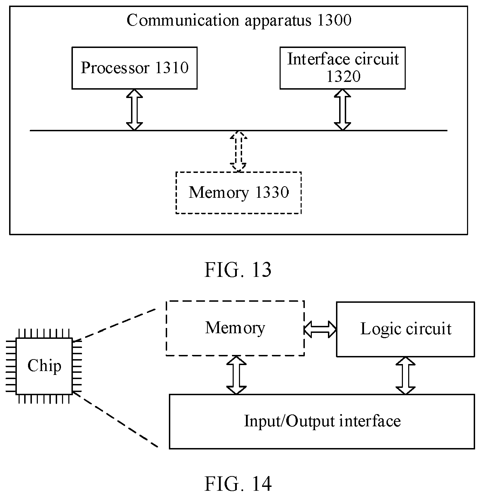

FIG. 12 and FIG. 13 are schematic diagrams of structures of possible communication apparatuses according to embodiments of this application. The communication apparatuses may be configured to implement functions in the foregoing method embodiments, and therefore can also implement beneficial effects of the foregoing method embodiments. In this embodiment of this application, the communication apparatus may be one of the terminals 120a to 120j shown in FIG. 5, or may be the base station 110a or 110b shown in FIG. 5, or may be a module (for example, a chip) applied to a terminal or a base station.

For example, when a communication apparatus 1200 is configured to implement the functions of the first communication device in the method embodiment shown in FIG. 6A,
a transceiver module 1201 is configured to: obtain an RLC SDU;
a processing module 1202 is configured to: generate an RLC PDU based on the RLC SDU, where the RLC PDU includes a header and data, the data is a first segment in data of the RLC SDU, the header includes a sequence number and a first index, the sequence number identifies the RLC SDU, the first index identifies a number of the first segment in segments of the RLC SDU, and different segments in the RLC SDU correspond to different indexes respectively; and
the transceiver module 1201 is further configured to: send the RLC PDU.

When the communication apparatus 1200 is configured to implement the functions of the second communication device in the method embodiment shown in FIG. 6A,
a transceiver module 1201 is configured to: receive an RLC PDU, where the RLC PDU includes a header and data, the data is a first segment of an RLC SDU, the header includes a sequence number and a first index, the sequence number identifies the RLC SDU, the first index identifies a number of the first segment in segments of the RLC SDU, and different segments in the RLC SDU correspond to different indexes respectively; and
a processing module 1202 is configured to: determine, based on the sequence number and the first index, that the data of the RLC PDU is the first segment in the segments of the RLC SDU.

For more detailed descriptions of the processing module 1202 and the transceiver module 1201, directly refer to related descriptions in the method embodiment shown in FIG. 6A. Details are not described herein again.

For example, when the communication apparatus 1200 is configured to implement the functions of the first communication device in the method embodiment shown in FIG. 7,
a processing module 1202 is configured to: obtain an RLC SDU; determine, based on configuration information, that the RLC SDU is not segmented, where the configuration information indicates that the RLC SDU is not segmented; and generate an RLC PDU based on the RLC SDU, where data of the RLC PDU is the complete RLC SDU; and
a transceiver module 1201 is configured to: send the RLC SDU.

When the communication apparatus 1200 is configured to implement the functions of the second communication device in the method embodiment shown in FIG. 7,
a transceiver module 1201 is configured to: receive an RLC PDU; and
a processing module 1202 is configured to: determine, based on configuration information, that data of the RLC PDU is a complete RLC SDU.

For more detailed descriptions of the processing module 1202 and the transceiver module 1201, directly refer to related descriptions in the method embodiment shown in FIG. 7. Details are not described herein again.

For example, when the communication apparatus 1200 is configured to implement the functions of the first communication device (for example, the first communication device is a terminal) in the method embodiment shown in FIG. 8A,
a transceiver module 1201 is configured to obtain configuration information of a radio bearer, where the configuration information indicates that a transmission mode of an RLC entity corresponding to the radio bearer is a transparent mode; and
a processing module 1202 is configured to: set, to the transparent mode based on the configuration information, the transmission mode of the RLC entity corresponding to the radio bearer.

For more detailed descriptions of the processing module 1202 and the transceiver module 1201, directly refer to related descriptions in the method embodiment shown in FIG. 8A. Details are not described herein again.

For example, when the communication apparatus 1200 is configured to implement the functions of the first communication device in the method embodiment shown in FIG. 9A,
a processing module 1202 is configured to obtain a PDCP SDU; and generate a PDCP PDU based on the PDCP SDU, where the PDCP PDU includes a header and data, the data is a segment in the PDCP SDU, the header includes a sequence number, the sequence number identifies the PDCP SDU, the header further includes a segment offset or an index, the segment offset indicates a byte offset of a first byte of the segment in the PDCP SDU, and the index identifies a number of the segment in segments of an RLC SDU; and
a transceiver module 1201 is configured to send the PDCP SDU.

When the communication apparatus 1200 is configured to implement the functions of the second communication device in the method embodiment shown in FIG. 9A,
a transceiver module 1201 is configured to: receive a plurality of RLC PDUs, where each of the plurality of PDCP PDUs includes a header and data, the data is a segment in a PDCP SDU, the header includes a sequence number, the sequence number identifies the PDCP SDU, the header further includes a segment offset or an index, the segment offset indicates a byte offset of a first byte of the segment in the PDCP SDU, and the index identifies a number of the segment in segments of an RLC SDU, and sequence numbers corresponding to the plurality of PDCP PDUs are the same; and
a processing module 1202 is configured to: generate one PDCP SDU based on the plurality of PDCP PDUs.

For more detailed descriptions of the processing module 1202 and the transceiver module 1201, directly refer to related descriptions in the method embodiment shown in FIG. 9A. Details are not described herein again.

For example, when the communication apparatus 1200 is configured to implement the functions of the first communication device in the method embodiment shown in FIG. 10B,
a processing module 1202 is configured to create a first PDCP entity and a second PDCP entity; and
a transceiver module 1201 is configured to: send a first PDCP data PDU based on the first PDCP entity; and send a first PDCP control PDU based on the second PDCP entity, where the first PDCP control PDU is associated with the first PDCP data PDU, and the first PDCP entity is different from the second PDCP entity.

When the communication apparatus 1200 is configured to implement the functions of the second communication device in the method embodiment shown in FIG. 10B,
a processing module 1202 is configured to create a fifth PDCP entity and a sixth PDCP entity;
a transceiver module 1201 is configured to: receive a first PDCP data PDU sent by a first PDCP entity of a first communication device; and receive a first PDCP control PDU sent by a second PDCP entity of the first communication device, where the first PDCP control PDU is associated with the first PDCP data PDU, and the first PDCP entity is different from the second PDCP entity; and
the processing module 1202 is configured to process the first PDCP control PDU based on the fifth PDCP entity, and process the first PDCP data PDU based on the sixth PDCP entity.

For more detailed descriptions of the processing module 1202 and the transceiver module 1201, directly refer to related descriptions in the method embodiment shown in FIG. 10B. Details are not described herein again.

For example, when the communication apparatus 1200 is configured to implement the functions of the first communication device in the method embodiment shown in FIG. 11A,
a transceiver module 1201 is configured to receive a data packet, where transmission modes of a PDCP entity and an RLC entity that are of the first communication device each are a transparent mode; and
a processing module 1202 is configured to determine, based on a time domain position at which the data packet is received and a mapping relationship between a sequence number and the time domain position, the sequence number corresponding to the data packet.

When the communication apparatus 1200 is configured to implement the functions of the second communication device in the method embodiment shown in FIG. 11A,
a processing module 1202 is configured to determine, based on a mapping relationship between a sequence number and a time domain position and the sequence number corresponding to a data packet, the time domain position corresponding to the data packet, where transmission modes of a PDCP entity and an RLC entity that are of the second communication device each are a transparent mode; and
the transceiver module 1201 is configured to send the first data packet at the time domain position corresponding to the data packet.

For more detailed descriptions of the processing module 1202 and the transceiver module 1201, directly refer to related descriptions in the method embodiment shown in FIG. 11A. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface.

Optionally, the communication apparatus 1300 may further include a memory 1330, configured to store instructions executed by the processor 1310, input data required for the processor 1310 to run the instructions, or data generated after the processor 1310 runs the instructions.

When the communication apparatus 1300 is configured to implement the apparatus shown in FIG. 12, the processor 1310 is configured to implement the functions of the processing module 1202, and the interface circuit 1320 is configured to implement the functions of the transceiver module 1201.

When the communication apparatus is a chip applied to a terminal, the chip of the terminal implements the functions of the terminal in the foregoing method embodiments. The chip of the terminal receives information from another module (for example, a radio frequency module or an antenna) in the terminal, where the information is sent by a base station to the terminal. Alternatively, the chip of the terminal sends information to another module (for example, a radio frequency module or an antenna) in the terminal, where the information is sent by the terminal to a base station.

When the communication apparatus is a module applied to a base station, the module of the base station implements the functions of the base station in the foregoing method embodiments. The module of the base station receives information from another module (for example, a radio frequency module or an antenna) in the base station, where the information is sent by a terminal to the base station. Alternatively, the module of the base station sends information to another module (for example, a radio frequency module or an antenna) in the base station, where the information is sent by the base station to a terminal. The module of the base station herein may be a baseband chip of the base station, or may be a DU or another module. The DU herein may be a DU under an open radio access network (open radio access network, O-RAN) architecture.

Based on a same technical concept, an embodiment of this application further provides a chip. Refer to FIG. 14. The chip may include a logic circuit and an input/output interface. Optionally, the chip may further include a memory. The input/output interface may be configured to receive code instructions (where the code instructions are stored in the memory, and may be directly read from the memory, or may be read from the memory through another component) and transmit the code instructions to the logic circuit. The logic circuit may be configured to run the code instructions to perform the method in the foregoing method embodiments.

Alternatively, the input/output interface may be a signal transmission interface circuit between the logic circuit and a transceiver. For example, in a sending scenario, the logic circuit is configured to execute XX to obtain Y data (where XX is a non-air interface operation, including but is not limited to an operation such as determining, judging, processing, calculation, searching, or comparison). The input/output interface may be configured to send the Y data to a transmitter (where the transmitter is configured to perform a sending operation on an air interface). For another example, in a receiving scenario, the input/output interface may be configured to receive Z data from a receiver (where the receiver is configured to perform a receiving operation on an air interface), and send the Z data to the logic circuit. The logic circuit is configured to perform XX processing on the Z data (where XX is a non-air interface operation, including but is not limited to an operation such as determining, judging, processing, calculation, searching, or comparison).

For example, when the chip is configured to implement the functions of the first communication device in the method embodiment shown in FIG. 6A,
the logic circuit is configured to: obtain an RLC SDU; and generate an RLC PDU based on the RLC SDU, where the RLC PDU includes a header and data, the data is a first segment in data of the RLC SDU, the header includes a sequence number and a first index, the sequence number identifies the RLC SDU, the first index identifies a number of the first segment in segments of the RLC SDU, and different segments in the RLC SDU correspond to different indexes respectively; and
the input/output interface is configured to: output the RLC PDU.

When the chip is configured to implement the functions of the second communication device in the method embodiment shown in FIG. 6A,
the input/output interface is configured to: input an RLC PDU, where the RLC PDU includes a header and data, the data is a first segment of an RLC SDU, the header includes a sequence number and a first index, the sequence number identifies the RLC SDU, the first index identifies a number of the first segment in segments of the RLC SDU, and different segments in the RLC SDU correspond to different indexes respectively; and
the logic circuit is configured to: determine, based on the sequence number and the first index, that the data of the RLC PDU is the first segment in the segments of the RLC SDU.

For more detailed descriptions of the foregoing logic circuit and the input/output interface, directly refer to related descriptions in the method embodiment shown in FIG. 6A. Details are not described herein again.

For example, when the chip is configured to implement the functions of the first communication device in the method embodiment shown in FIG. 7,
the logic circuit is configured to: obtain an RLC SDU; determine, based on configuration information, that the RLC SDU is not segmented, where the configuration information indicates that the RLC SDU is not segmented; and generate an RLC PDU based on the RLC SDU, where data of the RLC PDU is the complete RLC SDU; and
the input/output interface is configured to: output the RLC SDU.

When the chip is configured to implement the functions of the second communication device in the method embodiment shown in FIG. 7,
the input/output interface is configured to: input an RLC PDU; and
the logic circuit is configured to: determine, based on configuration information, that data of the RLC PDU is a complete RLC SDU.

For more detailed descriptions of the foregoing logic circuit and the input/output interface, directly refer to related descriptions in the method embodiment shown in FIG. 7. Details are not described herein again.

For example, when the chip is configured to implement the functions of the first communication device (for example, the first communication device is a terminal) in the method embodiment shown in FIG. 8A,
the input/output interface is configured to input configuration information of a radio bearer, where the configuration information indicates that a transmission mode of an RLC entity corresponding to the radio bearer is a transparent mode; and
the logic circuit is configured to: set, to the transparent mode based on the configuration information, the transmission mode of the RLC entity corresponding to the radio bearer.

For more detailed descriptions of the foregoing logic circuit and the input/output interface, directly refer to related descriptions in the method embodiment shown in FIG. 8A. Details are not described herein again.

For example, when the chip is configured to implement the functions of the first communication device in the method embodiment shown in FIG. 9A,
the logic circuit is configured to input a PDCP SDU; and generate a PDCP PDU based on the PDCP SDU, where the PDCP PDU includes a header and data, the data is a segment in the PDCP SDU, the header includes a sequence number, the sequence number identifies the PDCP SDU, the header further includes a segment offset or an index, the segment offset indicates a byte offset of a first byte of the segment in the PDCP SDU, and the index identifies a number of the segment in segments of an RLC SDU; and
the input/output interface is configured to output the PDCP SDU.

When the chip is configured to implement the functions of the second communication device in the method embodiment shown in FIG. 9A,
the input/output interface is configured to: input a plurality of RLC PDUs, where each of the plurality of PDCP PDUs includes a header and data, the data is a segment in a PDCP SDU, the header includes a sequence number, the sequence number identifies the PDCP SDU, the header further includes a segment offset or an index, the segment offset indicates a byte offset of a first byte of the segment in the PDCP SDU, and the index identifies a number of the segment in segments of an RLC SDU, and sequence numbers corresponding to the plurality of PDCP PDUs are the same; and
the logic circuit is configured to: generate one PDCP SDU based on the plurality of PDCP PDUs.

For more detailed descriptions of the foregoing logic circuit and the input/output interface, directly refer to related descriptions in the method embodiment shown in FIG. 9A. Details are not described herein again.

For example, when the chip is configured to implement the functions of the first communication device in the method embodiment shown in FIG. 10B,
the logic circuit is configured to create a first PDCP entity and a second PDCP entity; and
the input/output interface is configured to output a first PDCP data PDU based on the first PDCP entity; and output a first PDCP control PDU based on the second PDCP entity, where the first PDCP control PDU is associated with the first PDCP data PDU, and the first PDCP entity is different from the second PDCP entity.

When the chip is configured to implement the functions of the second communication device in the method embodiment shown in FIG. 10B,
the logic circuit is configured to create a fifth PDCP entity and a sixth PDCP entity;
the input/output interface is configured to input a first PDCP data PDU sent by a first PDCP entity of a first communication device; and input a first PDCP control PDU sent by a second PDCP entity of the first communication device, where the first PDCP control PDU is associated with the first PDCP data PDU, and the first PDCP entity is different from the second PDCP entity; and
the logic circuit is configured to process the first PDCP control PDU based on the fifth PDCP entity and process the first PDCP data PDU based on the sixth PDCP entity.

For more detailed descriptions of the foregoing logic circuit and the input/output interface, directly refer to related descriptions in the method embodiment shown in FIG. 10B. Details are not described herein again.

For example, when the chip is configured to implement the functions of the first communication device in the method embodiment shown in FIG. 11A,
the input/output interface is configured to input a data packet, where transmission modes of a PDCP entity and an RLC entity that are of the first communication device each are a transparent mode; and
the logic circuit is configured to determine, based on a time domain position at which the data packet is input and a mapping relationship between a sequence number and the time domain position, the sequence number corresponding to the data packet.

When the chip is configured to implement the functions of the second communication device in the method embodiment shown in FIG. 11A,
the logic circuit is configured to determine, based on a mapping relationship between a sequence number and a time domain position and the sequence number corresponding to a data packet, the time domain position corresponding to the data packet, where transmission modes of a PDCP entity and an RLC entity that are of the second communication device each are a transparent mode; and
the input/output interface is configured to output the first data packet at the time domain position corresponding to the data packet.

For more detailed descriptions of the foregoing logic circuit and the input/output interface, directly refer to related descriptions in the method embodiment shown in FIG. 11A. Details are not described herein again.

Based on a same technical concept, an embodiment of this application further provides a computer-readable storage medium. The storage medium stores a computer program or instructions. When the computer program or the instructions are executed by a communication apparatus, the method in the foregoing method embodiments is implemented.

Based on a same technical concept, an embodiment of this application further provides a computer program product. When the computer program product runs on a computer, the method in the foregoing method embodiments is enabled to be performed.

It can be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

A part or all of the foregoing embodiments may be implemented using software, hardware, firmware, or any combination thereof. When the software is used for implementation, the part or all of the foregoing embodiments may be implemented in a form of a computer program product. The computer program product includes one or more computer programs or instructions. When the computer programs or instructions are loaded and executed on a computer, procedures or functions according to embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from one website, computer, server, or data center to another website, computer, server, or data center in a wired manner or in a wireless manner. The computer-readable storage medium may be any usable medium that can be accessed by the computer, or a data storage device, such as a server or a data center, integrating one or more usable media. The usable medium may be a magnetic medium, such as a floppy disk, a hard disk drive, or a magnetic tape. The usable medium may alternatively be an optical medium, for example, a digital video disc. The usable medium may alternatively be a semiconductor medium, for example, a solid-state disk. The computer-readable storage medium may be a volatile or non-volatile storage medium, or may be a storage medium including two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

The following is optional based on a requirement of the specification. In this application, "at least one" means one or more, and "a plurality of" means two or more. A term "and/or" indicates an association relationship for describing associated objects and represents that three relationships may exist. For example, A and/or B may represent three cases: Only A exists, both A and B exist, and only B exists, where A and B may be singular or plural. In the text descriptions in this application, a character "/" generally indicates an "or" relationship between the associated objects. In a formula in this application, a character "/" indicates a "division" relationship between the associated objects; and "including at least one of A, B, and C" may represent including A; including B; including C; including A and B; including A and C; including B and C; or including A, B, and C.

It may be understood that various numbers in embodiments of this application are merely used for differentiation for ease of description, and are not intended to limit the scope of embodiments of this application. The sequence numbers of the foregoing processes do not indicate an execution sequence, and the execution sequence of the processes should be determined based on functions and internal logic of the processes.

## Claims

1. A communication method, comprising:
obtaining, by a first communication device, configuration information of a radio bearer, wherein the configuration information indicates that a transmission mode of a radio link control RLC entity corresponding to the radio bearer is a transparent mode; and
setting, by the first communication device to the transparent mode based on the configuration information, the transmission mode of the RLC entity corresponding to the radio bearer.

2. The method according to claim 1, wherein the radio bearer is one of the following: a data radio bearer, a signaling radio bearer, or a computing radio bearer.

3. A communication method, comprising:
generating, by a second communication device, configuration information of a radio bearer, wherein the configuration information indicates that a transmission mode of an RLC entity corresponding to the radio bearer is a transparent mode; and
sending, by the second communication device, the configuration information.

4. The method according to claim 3, wherein the radio bearer is one of the following: a data radio bearer or a computing radio bearer.

5. A communication method, comprising:
sending, by a first packet data convergence protocol PDCP entity of a first communication device, a first packet data convergence protocol data protocol data unit PDCP data PDU; and
sending, by a second PDCP entity of the first communication device, a first packet data convergence protocol control protocol data unit PDCP control PDU, wherein
the first PDCP control PDU is associated with the first PDCP data PDU, and the first PDCP entity is different from the second PDCP entity.

6. The method according to claim 5, wherein the method further comprises:
obtaining, by the first communication device, configuration information; and
determining, by the first communication device based on the configuration information, that the first PDCP entity sends the first PDCP data PDU and the second PDCP entity sends the first PDCP control PDU.

7. The method according to claim 6, wherein the configuration information comprises:
first indication information, indicating that a transmission entity of the PDCP data PDU of the first PDCP entity is separated from a transmission entity of the PDCP control PDU, or a transmission mode of the first PDCP entity is a transparent mode.

8. The method according to claim 7, wherein the configuration information further comprises at least one of the following:
second indication information, indicating that the first PDCP entity is configured to transmit the PDCP data PDU;
third indication information, indicating that the second PDCP entity is configured to transmit the PDCP control PDU; and
fourth indication information, indicating that the PDCP control PDU transmitted by the second PDCP entity is associated with the PDCP data PDU transmitted by the first PDCP entity.

9. The method according to any one of claims 5 to 8, further comprising
sending, by a third PDCP entity of the first communication device, a second PDCP data PDU; and
sending, by a fourth PDCP entity of the first communication device, a second PDCP control PDU, wherein
the second PDCP control PDU is associated with the second PDCP data PDU, and any two of the third PDCP entity, the fourth PDCP entity, the first PDCP entity, and the second PDCP entity are different.

10. The method according to any one of claims 5 to 8, further comprising:
sending, by a third PDCP entity of the first communication device, a second PDCP data PDU; and
sending, by the second PDCP entity of the first communication device, a second PDCP control PDU, wherein
the second PDCP control PDU is associated with the second PDCP data PDU, and any two of the third PDCP entity, the first PDCP entity, and the second PDCP entity are different.

11. The method according to claim 10, wherein
the first PDCP control PDU carries an identifier of the first PDCP entity; and
the second PDCP control PDU carries an identifier of the third PDCP entity or an identifier of the second PDCP data PDU.

12. A communication method, comprising:
receiving, by a second communication device, a first PDCP data PDU sent by a first PDCP entity of a first communication device; and
receiving, by the second communication device, a first PDCP control PDU sent by a second PDCP entity of the first communication device, wherein
the first PDCP control PDU is associated with the first PDCP data PDU, and the first PDCP entity is different from the second PDCP entity.

13. The method according to claim 12, wherein the method further comprises:
sending, by the second communication device, configuration information to the first communication device.

14. The method according to claim 13, wherein the configuration information comprises:
first indication information, indicating that a transmission entity of the PDCP data PDU of the first PDCP entity is separated from a transmission entity of the PDCP control PDU, or a transmission mode of the first PDCP entity is a transparent mode.

15. The method according to claim 14, wherein the configuration information further comprises at least one of the following:
second indication information, indicating that the first PDCP entity is configured to transmit the PDCP data PDU;
third indication information, indicating that the second PDCP entity is configured to transmit the PDCP control PDU; and
fourth indication information, indicating that the PDCP control PDU transmitted by the second PDCP entity is associated with the PDCP data PDU transmitted by the first PDCP entity.

16. The method according to any one of claims 12 to 15, further comprising:
receiving, by the second communication device, a second PDCP data PDU sent by a third PDCP entity of the first communication device; and
receiving, by the second communication device, a second PDCP control PDU sent by a fourth PDCP entity of the first communication device, wherein
the second PDCP control PDU is associated with the second PDCP data PDU, and any two of the third PDCP entity, the fourth PDCP entity, the first PDCP entity, and the second PDCP entity are different.

17. The method according to any one of claims 12 to 15, further comprising:
receiving, by the second communication device, a second PDCP data PDU sent by a third PDCP entity of the first communication device; and
receiving, by the second communication device, a second PDCP control PDU sent by the second PDCP entity of the first communication device, wherein
the second PDCP control PDU is associated with the second PDCP data PDU, and any two of the third PDCP entity, the first PDCP entity, and the second PDCP entity are different.

18. The method according to claim 17, wherein
the first PDCP control PDU carries an identifier of the first PDCP entity; and
the second PDCP control PDU carries an identifier of the third PDCP entity or an identifier of the second PDCP data PDU.

19. A communication method, comprising
receiving, by a first communication device, a data packet, wherein transmission modes of a PDCP entity and an RLC entity that are of the first communication device each are a transparent mode; and
determining, by the first communication device based on a time domain position at which the data packet is received and a mapping relationship between a sequence number and the time domain position, the sequence number corresponding to the data packet.

20. The method according to claim 19, wherein the method further comprises:
transferring, by a media access control entity of the first communication device, the time domain position of the data packet to the PDCP entity of the first communication device; and
the determining, by the first communication device based on a time domain position at which the data packet is received and a mapping relationship between a sequence number and the time domain position, the sequence number corresponding to the data packet comprises:
determining, by the PDCP entity of the first communication device based on the time domain position at which the media access control entity accesses the data packet and the mapping relationship between the sequence number and the time domain position, the sequence number corresponding to the data packet.

21. The method according to claim 19, wherein the determining, by the first communication device based on a time domain position at which the data packet is received and a mapping relationship between a sequence number and the time domain position, the sequence number corresponding to the data packet comprises:
determining, by a media access control entity of the first communication device based on the time domain position at which the data packet is received and the mapping relationship between the sequence number and the time domain position, the sequence number corresponding to the data packet; and
the method further comprises:
transferring, by the media access control entity of the first communication device to the PDCP entity of the first communication device, the sequence number corresponding to the data packet.

22. The method according to any one of claims 19 to 21, further comprising:
obtaining, by the first communication device, the mapping relationship between the sequence number and the time domain position from a network device.

23. A communication method, comprising:
determining, by a second communication device based on a mapping relationship between a sequence number and a time domain position and the sequence number corresponding to a data packet, the time domain position corresponding to the data packet, wherein transmission modes of a PDCP entity and an RLC entity that are of the second communication device each are a transparent mode; and
sending, by the second communication device, the first data packet at the time domain position corresponding to the data packet.

24. The method according to claim 23, wherein the method further comprises:
transferring, by the PDCP entity of the second communication device to a media access control entity of the second communication device, the sequence number corresponding to the data packet, wherein
the determining, by a second communication device based on a mapping relationship between a sequence number and a time domain position and the sequence number corresponding to a data packet, the time domain position corresponding to the data packet comprises:
determining, by the media access control entity of the second communication device based on the mapping relationship between the sequence number and the time domain position and the sequence number corresponding to the data packet, the time domain position corresponding to the data packet.

25. The method according to claim 23, wherein the determining, by a second communication device based on a mapping relationship between a sequence number and a time domain position and the sequence number corresponding to a data packet, the time domain position corresponding to the data packet comprises:
determining, by the PDCP entity of the second communication device based on the mapping relationship between the sequence number and the time domain position and the sequence number corresponding to the data packet, the time domain position corresponding to the data packet; and
the method further comprises:
transferring, by the PDCP entity of the second communication device to a media access control entity of the second communication device, the time domain position corresponding to the data packet.

26. The method according to any one of claims 23 to 25, further comprising:
obtaining, by the second communication device, the mapping relationship between the sequence number and the time domain position from a network device.

27. A communication apparatus, comprising:
a transceiver module, configured to obtain configuration information of a radio bearer, wherein the configuration information indicates that a transmission mode of an RLC entity corresponding to the radio bearer is a transparent mode; and
a processing module, configured to set, to the transparent mode based on the configuration information, the transmission mode of the RLC entity corresponding to the radio bearer.

28. A communication apparatus, comprising:
a processing module, configured to generate configuration information of a radio bearer, wherein the configuration information indicates that a transmission mode of an RLC entity corresponding to the radio bearer is a transparent mode; and
a transceiver module, configured to send the configuration information.

29. A communication apparatus, comprising:
a processing module, configured to establish a first PDCP entity and a second PDCP entity; and
a transceiver module, configured to send a first PDCP data PDU based on the first PDCP entity, and send a first PDCP control PDU based on the second PDCP entity, wherein
the first PDCP control PDU is associated with the first PDCP data PDU, and the first PDCP entity is different from the second PDCP entity.

30. A communication apparatus, comprising:
a processing module, configured to establish a fifth PDCP entity and a sixth PDCP entity;
a transceiver module, configured to receive a first PDCP data PDU sent by a first PDCP entity of a first communication device, and configured to receive a first PDCP control PDU sent by a second PDCP entity of the first communication device; and
a processing module, configured to process the first PDCP data PDU based on the fifth PDCP entity and process the first PDCP control PDU based on the sixth PDCP entity, wherein
the first PDCP control PDU is associated with the first PDCP data PDU, the first PDCP entity is different from the second PDCP entity, and the fifth PDCP entity is different from the sixth PDCP entity.

31. A communication apparatus, comprising:
a transceiver module, configured to receive a data packet, wherein transmission modes of a PDCP entity and an RLC entity that are of the apparatus each are a transparent mode; and
a processing module, configured to determine, based on a time domain position at which the data packet is received and a mapping relationship between a sequence number and the time domain position, the sequence number corresponding to the data packet.

32. A communication apparatus, comprising:
a processing module, configured to determine, based on a mapping relationship between a sequence number and a time domain position and the sequence number corresponding to a data packet, the time domain position corresponding to the data packet, wherein transmission modes of a PDCP entity and an RLC entity that are of the apparatus each are a transparent mode; and
a transceiver module, configured to send the first data packet at the time domain position corresponding to the data packet.

33. A communication apparatus, comprising: a processor and a memory, wherein
the processor is coupled to the memory, the memory is configured to store computer-executable instructions, and the processor is configured to execute the computer-executable instructions stored in the memory, to enable the communication apparatus to perform the method according to any one of claims 1 to 26.

34. A chip, comprising: a logic circuit and an input/output interface, wherein
the input/output interface is configured to receive a signal from another communication apparatus other than the chip and transmit the signal to the logic circuit, or send a signal from the logic circuit to another communication apparatus other than the chip, and the logic circuit is configured to implement the method according to any one of claims 1 to 26.

35. A computer-readable storage medium, wherein the storage medium stores a computer program or instructions; and when the computer program or the instructions are executed by a communication apparatus, the method according to any one of claims 1 to 26 is implemented.

36. A computer program product, wherein when the computer program product runs on a computer, the method according to any one of claims 1 to 26 is performed.
